(19) Europäisches Patentamt
European Patent Office
Office européen des brevets

(11) **EP 4 660 260 A1**

(12) **EUROPÄISCHE PATENTANMELDUNG**

(43) Veröffentlichungstag:
**10.12.2025   Patentblatt 2025/50**

(21) Anmeldenummer: **24179550.9**

(22) Anmeldetag: **03.06.2024**

(51) Internationale Patentklassifikation (IPC):
**C09D 7/61** *(2018.01)*          **C04B 20/00** *(2006.01)*
**C09D 7/40** *(2018.01)*          **C09D 133/04** *(2006.01)*
**C09D 5/02** *(2006.01)*

(52) Gemeinsame Patentklassifikation (CPC):
**C09D 7/61; C04B 20/0096; C09D 5/02; C09D 7/68;
C09D 7/69; C09D 133/04;** C08K 2003/265;
C08K 2201/005

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **STO SE & Co. KGaA
79780 Stühlingen (DE)**

(72) Erfinder:
• **FISCHER, Stefan
79879 Wutach (DE)**

• **FRAUNHOFFER, Dominik
78166 Donaueschingen (DE)**
• **HITZLER, Martin
78244 Gottmadingen (DE)**

(74) Vertreter: **Gottschalk, Matthias
Gottschalk Maiwald
Patentanwalts- und Rechtsanwalts- (Schweiz)
GmbH
Florastrasse 14
8008 Zürich (CH)**

Bemerkungen:
Geänderte Patentansprüche gemäss Regel 137(2)
EPÜ.

(54)  **BESCHICHTUNGSZUSAMMENSETZUNG FÜR PUTZ- ODER HAFTGRUND**

(57)  Die vorliegende Erfindung betrifft eine Beschichtungszusammensetzung, umfassend mindestens ein organisches Polymer-Bindemittel, eine mindestens bimodale Füllstoffkombination mit mindestens einem Feinfüllstoff (A) mit einen Medianwert der Partikelgröße $D_{50}$ von 5 μm bis 20 μm, und mindestens einem Feinstfüllstoff (B) mit einen Medianwert der Partikelgröße $D_{50}$ von 0,5 μm bis weniger als 5 μm, ein Hydrophobierungsmittel auf Siloxan-Basis, Wasserglas in einer Menge von höchstens 1,5 Gew.%, bezogen auf den Feststoffgehalt des Wasserglases und das Gesamtgewicht der Beschichtungszusammensetzung, und Wasser, wobei die Beschichtungszusammensetzung im Wesentlichen frei ist von Netz- und Dispergiermitteln, Entschäumern, Wachsen, Mattierungsmitteln, Filmbildehilfsmitteln und Entlüftern. Die Erfindung betrifft ferner eine Oberflächenbeschichtung, erhältlich oder erhalten mittels der Beschichtungszusammensetzung sowie die Verwendung der Oberflächenbeschichtung als Putzgrund, Haftgrund oder als Schutzschicht.

EP 4 660 260 A1

**Beschreibung**

Die vorliegende Erfindung betrifft eine Beschichtungszusammensetzung, umfassend mindestens ein organisches Polymer-Bindemittel, eine mindestens bimodale Füllstoffkombination mit mindestens einem Feinfüllstoff (A) mit einen Medianwert der Partikelgröße $D_{50}$ von 5 μm bis 20 μm, und mindestens einem Feinstfüllstoff (B) mit einen Medianwert der Partikelgröße $D_{50}$ von 0,5 μm bis weniger als 5 μm, ein Hydrophobierungsmittel auf Siloxan-Basis, Wasserglas in einer Menge von höchstens 1,5 Gew.%, bezogen auf den Feststoffgehalt des Wasserglases und das Gesamtgewicht der Beschichtungszusammensetzung, und Wasser, wobei die Beschichtungszusammensetzung im Wesentlichen frei ist von Netz- und Dispergiermitteln, Entschäumern, Wachsen, Mattierungsmitteln, Filmbildehilfsmitteln und Entlüftern.

Hintergrund der Erfindung

Putz- bzw. Haftgrundierungen sind im Stand der Technik bekannt. Ein Putz- oder Haftgrund dient als Haftvermittler zwischen einem Untergrund, beispielsweise einer Dämmplatte aus Mineralwolle, und darauf aufgebrachten Beschichtungen, wie Putz-, Kleber- oder Armierungsschichten. Neben einer guten Haftvermittlung zwischen Untergrund und der aufgebrachten Beschichtung sollte ein Putz- oder Haftgrund auch eine gute Brandschutzwirkung aufweisen.

Bei im Stand der Technik etablierten Putz- oder Haftgrundierungen gibt es jedoch weiterhin Verbesserungsbedarf. Zum einen weisen handelsübliche Putz- oder Haftgründe eine hohe Wasseraufnahme auf. Eine ausreichende Lagerstabilität kann bei herkömmlichen Putz- oder Haftgrundierungen nur durch Zugabe von oberflächenaktiven Substanzen, wie Netz- Dispergiermitteln gewährleistet werden, was aber auch zu einer erhöhten Wasseraufnahme führt. Eine hohe Wasseraufnahme ist jedoch aus verschiedenen Gründen unerwünscht. Beispielsweise kann es durch eine hohe Wasseraufnahme zum Eindringen von Feuchtigkeit in die Baustruktur kommen. Ferner ist eine ausreichende Brandsicherheit bei handelsüblichen Putz- oder Haftgründen oftmals nur durch Zugabe hoher Mengen an Substanzen, wie etwa Wasserglas, realisierbar, die zum einem hohen pH-Wert des Putz- oder Haftgrundes führen, was gewisse Kennzeichnungspflichten und Arbeitssicherheitsmaßnahmen nach sich zieht.

Es besteht daher ein Bedarf an Putz- oder Haftgrundierungen, die eine verminderte Wasseraufnahme zeigen, zudem lagerstabil sind und ohne besondere Kennzeichnungspflichten einen ausreichenden Brandschutz aufweisen. Eine Aufgabe der vorliegenden Erfindung ist es einen derartigen Putz- oder Haftgrund bereitzustellen.

Zusammenfassung der Erfindung

Die vorliegende Erfindung betrifft eine Beschichtungszusammensetzung, umfassend

(a) mindestens ein organisches Polymer-Bindemittel,
(b) eine mindestens bimodale Füllstoffkombination mit

(i) mindestens einem Feinfüllstoff (A) mit einen Medianwert der Partikelgröße $D_{50}$, bestimmt gemäß DIN ISO 9276-1:2004-09 und ISO 9276-2:2014-05, von 5 μm bis 20 μm, und
(ii) mindestens einem Feinstfüllstoff (B) mit einen Medianwert der Partikelgröße $D_{50}$ von 0,5 μm bis weniger als 5 μm,

(c) ein Hydrophobierungsmittel auf Siloxan-Basis,
(d) Wasserglas in einer Menge von höchstens 1,5 Gew.%, bezogen auf den Feststoffgehalt des Wasserglases und das Gesamtgewicht der Beschichtungszusammensetzung, und
(e) Wasser,

wobei die Beschichtungszusammensetzung im Wesentlichen frei ist von Netz- und Dispergiermitteln, Entschäumern, Wachsen, Mattierungsmitteln, Filmbildehilfsmitteln und Entlüftern.

Ferner betrifft die Erfindung eine Oberflächenbeschichtung, erhältlich mittels der erfindungsgemäßen Beschichtungszusammensetzung sowie die Verwendung dieser Oberflächenbeschichtung als Putzgrund, Haftgrund oder als Schutzschicht.

Weitere Ausführungsformen der vorliegenden Erfindung sind in der folgenden detaillierten Beschreibung und den angefügten Ansprüchen ausgeführt.

Detaillierte Beschreibung der Erfindung

Wie vorstehend ausgeführt betrifft die vorliegende Erfindung eine Beschichtungszusammensetzung, umfassend mindestens ein organisches Polymer-Bindemittel, eine mindestens bimodale Füllstoffkombination mit mindestens einem Feinfüllstoff (A) mit einen Medianwert der Partikelgröße $D_{50}$ von 5 $\mu$m bis 20 $\mu$m, und mindestens einem Feinstfüllstoff (B) mit einen Medianwert der Partikelgröße $D_{50}$ von 0,5 $\mu$m bis weniger als 5 $\mu$m, ein Hydrophobierungsmittel auf Siloxan-Basis, Wasserglas in einer Menge von höchstens 1,5 Gew.%, bezogen auf den Feststoffgehalt des Wasserglases und das Gesamtgewicht der Beschichtungszusammensetzung, und Wasser, wobei die Beschichtungszusammensetzung im Wesentlichen frei ist von Netz- und Dispergiermitteln, Entschäumern, Wachsen, Mattierungsmitteln, Filmbildehilfsmitteln und Entlüftern.

Gemäß der vorliegenden Erfindung enthält die Beschichtungszusammensetzung mindestens ein organisches Polymer-Bindemittel. Organische Polymer-Bindemittel werden typischerweise in Form einer Polymerdispersion eingesetzt. Grundsätzlich kommen gemäß der Erfindung alle organischen Polymer-Bindemittel in Betracht, die üblicherweise in einem Putz- oder Haftgrund eingesetzt werden. Exemplarisch seien als geeignete organische Polymer-Bindemittel Vinylacetat/ Ethylen-Copolymere, Copolymere auf Basis von Vinylaromaten, insbesondere Styrol, und Acrylaten oder auf Basis von Reinacrylaten. gegebenenfalls auch mit (Meth)acrylsäure, d.h. Acryl- und/oder Methacrylsäure, als Comonomerbausteine.

Demgemäß wird in einer bevorzugten Ausführungsform der Erfindung das mindestens eine organische Polymer-Bindemittel ausgewählt aus organischen Polymer-Bindemittel auf Basis von Vinylacetat/Ethylen-Copolymeren, Copolymeren auf Basis von Vinylaromaten, und/oder Homo- oder Copolymeren auf Basis von (Meth)acrylaten. In einer weiterhin bevorzugten Ausführungsform wird das mindestens eine organische Polymer-Bindemittel ausgewählt aus Homo- oder Copolymeren auf Basis von Reinacrylaten und/oder auf Basis von Styrolacrylatcopolymeren. Reinacrylate umfassen Homo- und insbesondere Copolymere von (Meth)acrylaten, d.h. Acrylaten und/oder Methacrylaten.

Das organische Polymer-Bindemittel wird in einer zweckmäßigen Ausgestaltung in Form einer wässrigen Bindemitteldispersion eingesetzt. Demgemäß kommen als polymere organische Bindemittel insbesondere auch solche in Frage, bei denen die in Wasser dispergierten oder dispergierbaren Polymere aus gleichen oder verschiedenen Monomeren gebildet sind, wobei mindestens eines der Monomere ein Acrylsäureester, Methacrylsäurester, Acrylsäure, Methacrylsäure, Vinylacetat, Vinylchlorid, Versatat, Acrylnitril oder eine vinylaromatische Verbindung darstellt. In einer zweckmäßigen Ausgestaltung basiert das in Wasser dispergierte oder dispergierbare Polymer dabei auf i) Acrylsäureestern und Vinylaromaten, insbesondere Styrol, oder auf ii) Acrylsäureestern und Vinylestern mindestens einer Koch-Säure (tertiäre gesättigte Monocarbonsäure), insbesondere der Versatinsäure, und gegebenenfalls Vinylaromaten, insbesondere Styrol.

In einer bevorzugten Ausführungsform liegt das mindestens eine organische Polymer-Bindemittel in der Beschichtungszusammensetzung in einer Gesamtmenge von 1,0 Gew.% bis 12,0 Gew.%, bezogen auf den Feststoffgehalt des organischen Polymer-Bindemittels und das Gesamtgewicht der Beschichtungszusammensetzung, vor. In einer stärker bevorzugten Ausführungsform liegt das mindestens eine organische Polymer-Bindemittel in der Beschichtungszusammensetzung in einer Gesamtmenge von 1,0 Gew.% bis 8,0 Gew.%, noch stärker bevorzugt in einer Gesamtmenge von 2,0 Gew.% bis 6,0 Gew.%, jeweils bezogen auf den Feststoffgehalt des organischen Polymer-Bindemittels und das Gesamtgewicht der Beschichtungszusammensetzung.

Die erfindungsgemäße Beschichtungszusammensetzung umfasst ferner eine mindestens bimodale Füllstoffkombination. Die mindestens bimodale Füllstoffkombination umfasst mindestens einen Feinfüllstoff (A) mit einen Medianwert der Partikelgröße $D_{50}$ von 5 $\mu$m bis 20 $\mu$m, und mindestens einem Feinstfüllstoff (B) mit einen Medianwert der Partikelgröße $D_{50}$ von 0,5 $\mu$m bis weniger als 5 $\mu$m,
Der $D_{50}$-Wert, der auch Halbwertskorngröße oder Medianwert genannt wird, und gemäß der vorliegenden Erfindung als *"Medianwert der Partikelgröße $D_{50}$"* bezeichnet wird, gibt die mittlere Partikelgröße eines teilchenförmigen Feststoffs an, so dass der Anteil der Partikel, die größer als der $D_{50}$-Wert sind, gleich dem Anteil der Partikel ist, die kleiner als der $D_{50}$-Wert sind. Die Bestimmung dieser Werte erfolgt erfindungsgemäß bevorzugt nach DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnungen von mittleren Partikelgrößen/-durchmessern und Momenten aus Partikelgrößenverteilungen). Dabei kann der Mastersizer 3000 der Firma Malvern Instruments Limited als Instrument zur Größenbestimmung eingesetzt werden. In der Regel können diese Werte aber auch einfach einem technischen Datenblatt entnommen werden.

In einer bevorzugten Ausführungsform weist der mindestens eine Feinfüllstoff (A) einen Medianwert der Partikelgröße $D_{50}$ von 5 $\mu$m bis 16 $\mu$m auf. Stärker bevorzugt weist der mindestens eine Feinfüllstoff (A) einen Medianwert der Partikelgröße $D_{50}$ von 5 $\mu$m bis 12 $\mu$m auf.

Der mindestens eine Feinfüllstoff (A) ist in der erfindungsgemäßen Beschichtungszusammensetzung vorzugsweise in einer Gesamtmenge von 20 bis 50 Gew.%, bezogen auf das Gesamtgewicht der Beschichtungszusammensetzung, enthalten. Vorzugsweise ist der mindestens eine Feinfüllstoff (A) in einer Gesamtmenge von 25 bis 45 Gew.%, bezogen auf das Gesamtgewicht der Beschichtungszusammensetzung, stärker bevorzugt von 30 bis 45 Gew.%, enthalten.

Der mindestens eine Feinfüllstoff (A) wird beispielsweise ausgewählt aus silikatischen, karbonatischen, oxidischen, hydroxidischen und/oder sulfatischen Füllstoffen. Illustrative Beispiele umfassen Quarz, Cristobalit, Kalkstein, Marmor, Dolomit, Aluminiumhydroxid und/oder Bariumsulfate. Kalkhydrat und Sulfatträger werden gemäß der vorliegenden Erfindung nicht zu den Füllstoffen gerechnet. In einer Ausführungsform wird der mindestens eine Feinfüllstoff (A) aus karbonatischen und/oder Aluminiumhydroxid. Illustrative Beispiele hierfür Calciumcarbonat, Calcit, Kalkstein, Marmor, Dolomit und/oder Aluminiumhydroxid. In einer stärker bevorzugten Ausführungsform wird der Feinfüllstoff (A) aus karbonatischen Füllstoffen ausgewählt.

Für die Auswahl des Feinfüllstoffs (A) spielt in bevorzugten Ausführungsformen auch der PCS-Wert eine Rolle. PCS steht für *"Pouvoir Calorifique Superieur"* und bedeutet so viel wie Brutto-Verbrennungswärme. Der PCS-Wert wird bei der Berechnung der Brennbarkeit von Baustoffen herangezogen. Gemessen wird der PCS-Wert nach DIN EN ISO 1716 in einem Bombenkalorimeter, beispielsweise einem IKA C 2000. Die Einheit ist MJ/kg. Sogenannte Flammschutzmittel weisen einen negativen PCS-Wert bzw. eine negative Brutto-Verbrennungswärme auf. Das heißt, dass Flammschutzmittel bei der Verbrennung Energie aufnehmen bzw. verbrauchen und nicht freisetzen.

Bevorzugt weist der in der erfindungsgemäßen Beschichtungszusammensetzung enthaltene mindestens eine Feinfüllstoff (A) zumindest in Teilen einen negativen PCS-Wert auf. Gleiches gilt für den weiter nachstehend beschriebenen mindestens einen Feinstfüllstoff (B) sowie für die in der Beschichtungszusammensetzung enthaltene mindestens bimodale Füllstoffkombination als Ganzes.

Ein Feinfüllstoff mit einem negativem PCS-Wert dient zugleich als Flammschutzmittel, so dass auf die separate Zugabe eines Flammschutzmittels verzichtet werden kann. Besonders bevorzugt werden Calciumcarbonat, Calcit, Kalkstein, Marmor, Dolomit und/oder Aluminiumhydroxid als Feinfüllstoff eingesetzt. Calciumcarbonat weist beispielsweise - je nach Typ, Reinheit und Beschaffenheit - einen PCS-Wert [MJ/kg] zwischen -0,8 und -1,21 auf. Der PCS-Wert von Aluminiumhydroxid liegt - je nach Reinheit und Beschaffenheit - zwischen -0,52 und -1,1.

Daher trägt die Verwendung von speziell karbonatischen Füllstoffen und/oder Aluminiumhydroxid trägt zu verbesserten Brandschutzwerten der erfindungsgemäßen Beschichtungszusammensetzungen bei.

Demgemäß beträgt der Anteil an Feinfüllstoff (A) mit einem negativen PCS-Wert (vorzugsweise mit einem PCS-Wert -0,5 MJ/kg oder weniger, stärker bevorzugt von -0,8 MJ/kg oder weniger) in einer Ausführungsform mehr als 40 Gew.-%, bezogen auf das Gesamtgewicht an Feinfüllstoff (A), vorzugsweise mehr als 50 Gew.-%, stärker bevorzugt mehr als 60 Gew.-%.

In einer Ausführungsform weist der mindestens eine Feinfüllstoff (A) einen (negativen) PCS-Wert, bestimmt gemäß DIN EN ISO 1716, von weniger als 0 MJ/kg auf. In einer bevorzugten Ausführungsform weist der mindestens eine Feinfüllstoff (A) einen PCS-Wert von -0,5 MJ/kg oder weniger, stärker bevorzugt von -0,8 MJ/kg oder weniger, auf.

Gemäß einer bevorzugten Ausführungsform weist der mindestens eine Feinfüllstoff (A) eine Ölzahl von 4 g/100g bis 30 g/100g auf.

Die Ölzahl von Pigmenten oder Füllstoffen ist eine in der Lack- und Farbenindustrie häufig verwendete Kenngröße. Sie stellt ein Maß für den Bindemittelbedarf des Pigments oder Füllstoffs dar. Gemäß der vorliegenden Erfindung beziehen sich Angaben zu Ölzahlen auf eine Bestimmung gemäß DIN EN ISO 787-5. Nach DIN EN ISO 787-5 versteht man unter der Ölzahl diejenige Menge an tropfenweise zugegebenem Lackleinöl einer festgelegten Säurezahl, die 100 g Pigment oder Füllstoff beim Kneten mit einem Spatel bis zum Erreichen einer zusammenhängenden, kittartig-steifen Paste absorbiert (*"Netzpunkt"*). Die Ölzahl korreliert mit der spezifischen Oberfläche eines Füllstoffs. Die spezifische Oberfläche wiederum wird einerseits bestimmt durch die Partikelgröße des Füllstoffs und andererseits durch die Morphologie der einzelnen Füllstoffpartikel. D.h. Füllstoffe, die aus sehr feinen und kleinen Partikeln bestehen und/oder lamellare oder poröse Partikelformen aufweisen, haben eine höhere spezifische Oberfläche (und damit eine höhere Ölzahl) als Füllstoffe bestehend aus größeren und kompakten Partikeln mit nodularer, rundlicher Partikelform. Nodulare Füllstoffe weisen bei gleicher Feinheit eine niedrigere Ölzahl auf als lamellare Füllstoffe. Füllstoffe, die in etwa gleiche Feinheit (sprich Partikelgrößen, $D_{50}$-Werte) aufweisen, sich aber in der Ölzahl stark unterscheiden, müssen demzufolge unterschiedliche Partikelstrukturen (sprich eine unterschiedliche Morphologie) haben. Analoges gilt natürlich auch umgekehrt.

In einer stärker bevorzugten Ausführungsform weist der mindestens eine Feinfüllstoff (A) eine Ölzahl von 8 g/100g bis 26 g/100g, stärker bevorzugt von 10 g/100g bis 22 g/100g, auf.

Die die in der erfindungsgemäßen Beschichtungszusammensetzung enthaltene mindestens bimodale Füllstoffkombination umfasst ferner mindestens einem Feinstfüllstoff (B). Der mindestens eine Feinstfüllstoff (B) weist einen Medianwert der Partikelgröße $D_{50}$ von 0,5 µm bis weniger als 5 µm auf. In einer bevorzugten Ausführungsform weist der mindestens eine Feinstfüllstoff (B) einen Medianwert der Partikelgröße $D_{50}$ von 0,8 µm bis weniger 5,0 µm auf, vorzugsweise von 1,0 µm bis weniger als 5,0 µm, wie etwa 1,0 µm bis 4,0 µm.

Der mindestens eine Feinstfüllstoff (B) ist in der erfindungsgemäßen Beschichtungszusammensetzung vorzugsweise in einer Gesamtmenge von 5 bis 30 Gew.%, bezogen auf das Gesamtgewicht der Beschichtungszusammensetzung, vorhanden. Vorzugsweise ist der mindestens eine Feinstfüllstoff (B) in einer Gesamtmenge von 8 bis 25 Gew.%, stärker bevorzugt von 10 bis 22 Gew.%, enthalten, jeweils bezogen auf das Gesamtgewicht der Beschichtungszusammensetzung.

Der mindestens eine Feinstfüllstoff (B) kann im Prinzip aus denselben Füllstoffklassen wie vorstehend für den Feinfüllstoff (A) beschrieben ausgewählt werden. In einer Ausführungsform wird der Feinstfüllstoff (B) ausgewählt aus silikatischen, karbonatischen, oxidischen, hydroxidischen und/oder sulfatischen Füllstoffen. In einer bevorzugten Ausführungsform wird der Feinstfüllstoff (B) aus karbonatischen Füllstoffen und/oder Aluminiumhydroxid, *stärker bevorzugt* karbonatischen Füllstoffen ausgewählt.

In einer Ausführungsform beträgt der Anteil an Feinstfüllstoff (B) mit einem negativen PCS-Wert (vorzugsweise mit einem PCS-Wert -0,5 MJ/kg oder weniger, stärker bevorzugt von -0,8 MJ/kg oder weniger) mehr als 40 Gew.-%, bezogen auf das Gesamtgewicht an Feinstfüllstoff (B), vorzugsweise mehr als 50 Gew.-%, stärker bevorzugt mehr als 60 Gew.-%.

Gemäß in einer Ausführungsform weist der mindestens eine Feinstfüllstoff (B) einen (negativen) PCS-Wert, bestimmt gemäß DIN EN ISO 1716, von weniger als 0 MJ/kg auf. In einer bevorzugten Ausführungsform weist der mindestens eine Feinstfüllstoff (B) einen PCS-Wert von -0,5 MJ/kg oder weniger, stärker bevorzugt von -0,8 MJ/kg oder weniger, auf.

Gemäß einer Ausführungsform weist der mindestens eine Feinstfüllstoff (B) eine Ölzahl von 5 g/100g bis 35 g/100g auf. In einer bevorzugten Ausführungsform weist der mindestens eine Feinstfüllstoff (B) eine Ölzahl von 10 g/100g bis 30 g/100g, stärker bevorzugt von 12 g/100g bis 25 g/100g, auf.

Der Feinstfüllstoff (B) wird gemäß der Erfindung in Kombination zusammen mit dem Feinfüllstoff (A) in einer mindestens bimodalen Füllstoffkombination eingesetzt. Die mindestens bimodale Füllstoffkombination mit Feinfüllstoff (A) und Feinstfüllstoff (B) mit den vorstehend angegebenen Medianwerten der Partikelgrößen $D_{50}$ ermöglicht eine besonders dichte Packung der Füllstoffe, da sich die Feinstfüllstoffe (B) in die verbleibenden Räume zwischen den Feinfüllstoffen (A) setzen. Je dichter die Packung ist, desto besser wird eine Struktur erreicht, die eine niedrige Wasseraufnahme aufweist, da weniger Raum zur Verfügung steht, der beispielsweise mit Bindemittel oder mit Wasser gefüllt werden kann.

Zur Festlegung der Medianwerte der Partikelgrößen $D_{50}$ der einzelnen Füllstoffe in der mindestens bimodalen Füllstoffkombination kann vom Medianwert der Partikelgröße $D_{50}$ der Fraktion der Feinfüllstoffe (A) ausgegangen werden. Die Feinfüllstoffe (A) bilden innerhalb der Packung eine Art Grundgerüst aus. In diesem Grundgerüst verbleiben zwischen den Feinfüllstoffen (A) Räume, deren Größe sich berechnen bzw. abschätzen lässt, so dass hiernach die Größe der Feinstfüllstoffe (B) festlegbar ist.

Bei der Berechnung der verbleibenden Räume zwischen den Füllstoffen können die Partikel einer Größenfraktion vereinfacht bzw. modellhaft als Kugeln gleicher Größe betrachtet werden, wobei die Größe dem jeweiligen Medianwert der Partikelgröße $D_{50}$ entspricht. In der Realität weicht die Form der Partikel von der Kugelform ab. Zudem haben nicht alle Füllstoffe einer Größenfraktion die gleiche Größe, sondern liegen ebenfalls in einer Größenverteilung vor. All dies kann jedoch bei der Berechnung der verbleibenden Räume bzw. bei der Bestimmung des Medianwert der Partikelgröße $D_{50}$ der einzelnen Größenfraktionen vernachlässigt werden.

In einer möglichst dichten Kugelpackung bilden sich Tetraederlücken und Oktaederlücken aus. In eine Oktaederlücke zwischen Partikeln/Kugeln eines Feinfüllstoffs mit dem Durchmesser D passt eine kleinere Kugel mit einem Durchmesser d, wenn d im Bereich 0,155*D und 0,414*D liegt. Maßgebender sind jedoch die Tetraederlücken. In eine Tetraederlücke zwischen Partikeln/Kugeln eines Feinfüllstoffs mit dem Durchmesser D passt eine kleinere Kugel mit einem Durchmesser d, wenn d im Bereich 0,225*D und 0,291*D liegt.

Verallgemeinernd lässt sich sagen, dass der Medianwert der Partikelgröße $D_{50}$ des Feinstfüllstoffs (B) zwischen 0,155 und 0,414, vorzugsweise zwischen 0,225 und 0,414, weiterhin vorzugsweise zwischen 0,225 und 0,291, des Medianwerts der Partikelgröße $D_{50}$ des Feinfüllstoffs (A) liegen sollte, um eine möglichst dichte Packung zu erhalten. Demgemäß betrifft die vorliegende Erfindung in einer Ausführungsform eine Beschichtungszusammensetzung wie vorstehend beschrieben, umfassend eine mindestens bimodale Füllstoffkombination, wobei der Medianwert der Partikelgröße $D_{50}$ des Feinstfüllstoffs (B) vorzugsweise 0,155 bis 0,414 des Medianwerts der Partikelgröße $D_{50}$ des Feinfüllstoffs (A) beträgt, und wobei stärker bevorzugt der Medianwert der Partikelgröße $D_{50}$ des Feinstfüllstoffs (B) 0,225 bis 0,414, noch stärker bevorzugt 0,225 bis 0,291 des Medianwerts der Partikelgröße $D_{50}$ des Feinfüllstoffs (A) beträgt.

**In** einer bevorzugten Ausführungsform der Erfindung umfasst die mindestens bimodale Füllstoffkombination der Beschichtungszusammensetzung Feinfüllstoff (A) und Feinstfüllstoff (B), wie vorstehend beschrieben, wobei das Gewichtsverhältnis der Gesamtmasse des Feinfüllstoffs (A) in der Beschichtungszusammensetzung zu der Gesamtmasse des Feinstfüllstoffs (B) in der Beschichtungszusammensetzung 1-5 : 1 beträgt. In einer weiter bevorzugten Ausführungsform umfasst die mindestens bimodale Füllstoffkombination Feinfüllstoff (A) und Feinstfüllstoff (B), wobei vorzugsweise das Gewichtsverhältnis der Gesamtmasse des Feinfüllstoffs (A) in der Beschichtungszusammensetzung zu der Gesamtmasse des Feinstfüllstoffs (B) in der Beschichtungszusammensetzung 1,5-4 : 1, stärker bevorzugt 2-3 : 1, wie beispielsweise 2,5 : 1, beträgt.

In einer bevorzugten Ausführungsform der Erfindung umfasst die mindestens bimodale Füllstoffkombination der Beschichtungszusammensetzung Feinfüllstoff (A) und Feinstfüllstoff (B), wie vorstehend beschrieben, wobei das Volumenverhältnis des Gesamtvolumens des Feinfüllstoffs (A) in der Beschichtungszusammensetzung zu dem Gesamtvolumen des Feinstfüllstoffs (B) in der Beschichtungszusammensetzung 1-5 : 1 beträgt. In einer weiter bevorzugten Ausführungsform umfasst die mindestens bimodale Füllstoffkombination Feinfüllstoff (A) und Feinstfüllstoff (B), wobei vorzugsweise das Volumenverhältnis des Gesamtvolumens des Feinfüllstoffs (A) in der Beschichtungszusammensetzung zu dem Gesamtvolumen des Feinstfüllstoffs (B) in der Beschichtungszusammensetzung 1,5-4 : 1, stärker bevorzugt 2-3 : 1, wie beispielsweise 2,5 : 1, beträgt.

In einer weiteren Ausführungsform der Erfindung beträgt die mittlere Gesamt-Ölzahl aller Füllstoffe in der Beschichtungszusammensetzung 22 g/100g oder weniger. Zur Berechnung der mittleren Gesamt-Ölzahl werden die Ölzahlen und Gewichtsanteile der einzelnen Füllstoffe, die in der Beschichtungszusammensetzung vorliegen, herangezogen. Der Gesamtgewichtsanteil aller Füllstoffe in der Beschichtungszusammensetzung wird dabei auf 100% normiert. Zum Beispiel ergibt sich für eine Beschichtungszusammensetzung, die insgesamt 54 Gew.% (≈100%) an Füllstoffen enthält - davon insgesamt 40 Gew.% (≈74,1%) an Feinfüllstoff mit einer Ölzahl von 14 g/100g und insgesamt 14 Gew.% (≈25,9%) an Feinstfüllstoff mit einer Ölzahl von 18 g/100g - eine mittlere Gesamt-Ölzahl gemäß folgender Gleichung:

$$(0{,}741 * 14) + (0{,}259 * 18) = 15{,}0$$

Die mittlere Gesamt-Ölzahl aller Füllstoffe kann auch experimentell bestimmt werden, indem einfach die entsprechende Mischung der Füllstoffe zur Bestimmung der Ölzahl nach DIN EN ISO 787-5 herangezogen wird.

Vorzugsweise beträgt die mittlere Gesamt-Ölzahl aller Füllstoffe in der Beschichtungszusammensetzung 20 g/100g oder weniger, stärker bevorzugt 18 g/100g oder weniger.

Auf zur vorstehend beschriebenen Bestimmung der mittleren Ölzahl analogen Weise kann nach der mittlere Gesamt-PCS-Wert (gemäß DIN EN ISO 1716) aller Füllstoffe in der Beschichtungszusammensetzung berechnet werden. Ferner kann auch der mittlere Gesamt-PCS-Wert aller Füllstoffe experimentell bestimmt werden, indem einfach die entsprechende Mischung der Füllstoffe zur Bestimmung des PCS-Wertes nach DIN EN ISO 1716 herangezogen wird. In einer Ausführungsform beträgt der mittlere Gesamt-PCS-Wert aller Füllstoffe in der Beschichtungszusammensetzung weniger als 0 MJ/kg (negativer PCS-Wert). In einer bevorzugten Ausführungsform beträgt der mittlere Gesamt-PCS-Wert -0,5 MJ/kg oder weniger, stärker bevorzugt -0,8 MJ/kg oder weniger.

In der Beschichtungszusammensetzung der vorliegenden Erfindung ist die mindestens bimodale Füllstoffkombination vorzugsweise in einer Gesamtmenge von 35 bis 75 Gew.%, bezogen auf das Gesamtgewicht der Beschichtungszusammensetzung, vorhanden. In einer weiteren bevorzugten Ausführungsform ist die mindestens bimodale Füllstoffkombination in einer Gesamtmenge von 40 bis 70 Gew.%, stärker bevorzugt 45 bis 60 Gew.%, vorhanden.

Die Beschichtungszusammensetzung der vorliegenden Erfindung enthält ferner ein Hydrophobierungsmittel auf Siloxan-Basis. In einer Ausführungsform ist das Hydrophobierungsmittel auf Siloxan-Basis ausgewählt aus Polysiloxanen in Form von Silikonharzen oder Silikonölen. Polysiloxane können aus mono-, di-, tri- und/oder quartärfunktionalen Einheiten aufgebaut sein und können zu zwei- oder dreidimensionalen Strukturen vernetzen. Silikonharze sind Polysiloxane, die neben mono- und difunktionalen Einheiten auch aus tri- und ggfs. quartärfunktionalen Einheiten aufgebaut sind.

In einer bevorzugten Ausführungsform werden gemäß der Erfindung lineare Silikonöle als Hydrophobierungsmittel eingesetzt. Silikonöle werden gelegentlich mit flüssigen Silikonharzen in einen Topf geworfen oder verwechselt. Silikonöle in Sinne der Erfindung sind in der Regel linear (in seltenen Fällen cyclisch) und ausschließlich aus mono- und difunktionalen Einheiten aufgebaut. Sie enthalten keine tri- oder quartärfunktionale Einheiten wie die Silikonharze und können deshalb nicht über Si-O-Si-Brücken vernetzen. Silikonöle sind, wie es die Bezeichnung "Öl" schon besagt, bei 20°C/1 bar flüssig bis zähflüssig.

Die Seitengruppen der erfindungsgemäß bevorzugt verwendeten Silikonöle sind weitgehend unpolarer Natur, beispielsweise Hydrocarbyl-Gruppen, können aber vereinzelt reaktive Gruppen (beispielsweise alkylierte Aminogruppen) tragen. Vorzugsweise enthält das Silikonöl hauptsächlich Hydrocarbylseitenketten, z.B. $C_1$ bis $C_{20}$ Hydrocarbylseitenketten, noch bevorzugter hauptsächlich Alkylseitenketten, z.B. $C_1$ bis $C_{20}$ Alkylseitenketten. Durch die Abwesenheit von polaren Seitenketten weist das Silikonöl stark unpolaren Charakter auf. Normalerweise enthalten die Alkylketten nicht mehr als 5 Kohlenstoffatome. Verzweigte und lineare Polysiloxane mit methyl-, ethyl- oder propyl-Seitenketten sind besonders bevorzugt.

*"Hauptsächlich unpolare Seitenketten"* bedeutet gemäß der vorliegenden Erfindung, dass bei der Synthese der Silikonöle keine polaren Seitenketten absichtlich eingeführt werden.

*"Hauptsächlich Hydrocarbylseitenketten"* bedeutet gemäß der vorliegenden Erfindung, dass bei der Synthese der Silikonöle keine Seitenketten außer Hydrocarbylseitenketten absichtlich eingeführt werden.

*"Hauptsächlich Alkylseitenketten"* bedeutet gemäß der vorliegenden Ergründung, dass bei der Synthese der Silikonöle keine Seitenketten außer Alkylseitenketten absichtlich eingeführt werden. Die Alkylseitenketten können ihrerseits aber vereinzelt reaktive Gruppen (beispielsweise alkylierte Aminogruppen) tragen. Diese reaktiven Gruppen sind aber nicht in der Lage, zu einer zwei- oder dreidimensionalen Vernetzung des Silikonöls zu führen; d.h. diese Gruppen sind reaktiv, aber nicht vernetzend.

Analoges gilt für $C_1$ bis $C_{20}$ Hydrocarbylseitenketten und $C_1$ bis $C_{20}$ Alkylseitenketten.

In einer bevorzugten Ausführungsform enthält das Silikonöl ausschließlich Hydrocarbylseitenketten, noch bevorzugter ausschließlich Alkylseitenketten gemäß einer der o.g. Ausführungsformen.

Das Silikonöl weist vorzugsweise keine Alkoxyseitenketten auf. Die Abwesenheit von Alkoxyseitenketten kann durch Abwesenheit der symmetrischen Si-O-C-Streckschwingung im FTIR-Spektrum (940 bis 970 cm$^{-1}$) festgestellt werden.

Vorzugsweise weist das Silikonöl ein Molekulargewicht von 1000 bis 20000 g/mol auf, stärker bevorzugt sind 4000 bis 10000 g/mol.

Das Silikonöl weist vorzugsweise bei 25°C eine Viskosität von 20 bis 2000mPa s auf, stärker bevorzugt sind 25 bis 1600mPa s., noch bevorzugter 30 bis 1400mPa s. Die Messung der Viskosität erfolgt beispielsweise mit einem Rotationsrheometer Anton Paar Rheolab QC.

Vorzugsweise enthält die Zusammensetzung nur Silikonöle, die die o.g. Eigenschaften in deren bevorzugten Ausführungsformen aufweisen.

In einer bevorzugten Ausführungsform der Erfindung wird lediglich Silikonöl als Hydrophobierungsmittel eingesetzt. Andere Polysiloxane oder Silikonharze sind vorzugsweise in der erfindungsgemäßen Beschichtungszusammensetzung nicht enthalten. Daher wird erfindungsgemäß als Hydrophobierungsmittel vorzugsweise kein Silikonharz oder allgemeines Polysiloxan, sondern ein Silikonöl eingesetzt. Silikonharze als Hydrophobierungsmittel sind weniger bevorzugt, da Silikonharze in der Regel in Form von wässrigen oder lösemittelhaltigen Emulsionen oder Dispersionen vorliegen. Zur Emulgierung bzw. Dispergierung werden wiederum oberflächenaktive Substanzen wie Emulgatoren oder Dispergiermittel benötigt, die dann natürlich in die erfindungsgemäße Beschichtungszusammensetzung eingeschleust werden.

Im Stand der Technik sind auch Entschäumer auf Silikonöl-Basis bekannt. Diese gehören jedoch nicht zu den erfindungsgemäß bevorzugt eingesetzten linearen Silikonölen. Vielmehr handelt es sich bei Entschäumern auf Silikonöl-Basis um Reaktionsprodukte oder Zusammensetzungen mit (amorphen) Kieselsäuren. Entschäumer bestehen aus oder enthalten oberflächenaktive Substanzen. Sie sind per se oberflächenaktiv und können deshalb keine hydrophobierende Wirkung aufweisen. Davon sind die erfindungsgemäß eingesetzten linearen Silikonöle zu unterscheiden, die eben keine Oberflächenaktivität aufweisen. Es sind auch Entschäumer erhältlich, die Silikonöl in geringen Mengen enthalten. Beispielhaft sei hier das Produkt *"Agitan* 218" der Fa. Münzing erwähnt. Aufgrund der Oberflächenaktivität haben solche Entschäumer keine hydrophobierenden Eigenschaften und sind nicht als erfindungsgemäß als Hydrophobierungsmittel eingesetzte Silikonöle anzusehen. Außerdem sind die Beschichtungszusammensetzungen der vorliegenden Erfindung - wie nachstehend näher ausgeführt - ohnehin im Wesentlich frei von üblichen Entschäumern.

In einer Ausführungsform ist das Hydrophobierungsmittel auf Siloxan-Basis, vorzugsweise das lineare Silikonöl wie vorstehend beschrieben, in der Beschichtungszusammensetzung in einer Menge von 0,05 bis 2,0 Gew.%, bezogen auf das Gesamtgewicht der Beschichtungszusammensetzung, enthalten. In einer bevorzugten Ausführungsform ist das Hydrophobierungsmittel auf Siloxan-Basis, vorzugsweise das lineare Silikonöl, in der Beschichtungszusammensetzung in einer Menge von 0,1 bis 1,5 Gew.%, stärker bevorzugt 0,1 bis 1,0 Gew.%, enthalten.

Die Beschichtungszusammensetzung der vorliegenden Erfindung erhält ferner eine gewisse Menge an Wasserglas. Allerdings ist erfindungsgemäß die Menge an Wasserglas auf höchstens 1,5 Gew.%, bezogen auf den Feststoffgehalt des Wasserglases und das Gesamtgewicht der Beschichtungszusammensetzung, beschränkt. In einer bevorzugten Ausführungsform ist in der Beschichtungszusammensetzung Wasserglas in einer Menge von 0,2 bis 1,5 Gew.%, bezogen auf den Feststoffgehalt des Wasserglases und das Gesamtgewicht der Beschichtungszusammensetzung, vorhanden. In einer stärker bevorzugten Ausführungsform ist in der Beschichtungszusammensetzung Wasserglas in einer Menge von 0,2 bis 1,2 Gew.%, noch stärker bevorzugt in einer Menge von 0,3 bis 0,8 Gew.%, jeweils bezogen auf den Feststoffgehalt des Wasserglases und das Gesamtgewicht der Beschichtungszusammensetzung.

Die Verwendung von Wasserglas als mineralisches Bindemittel ist im Stand der Technik bekannt. Um eine brandsichere Rezeptur zu erhalten wurden üblicherweise hohe Mengen an Wasserglas eingesetzt. Die vorliegende Erfindung unterscheidet sich vom Stand der Technik unter anderem dadurch, dass nur eine geringe Menge an Wasserglas verwendet wird. Die Erfinder der vorliegenden Erfindung haben festgestellt, dass die Verwendung hoher Mengen an Wasserglas für die Lösung der der Erfindungen zugrundeliegenden Aufgaben von Nachteil ist. Zum einen muss die Rezeptur bei hohen Mengen an Wasserglas stabilisiert und relativ hohe Mengen an Additiven zugesetzt werden. Dadurch gelangen auch oberflächenaktive Substanzen in die Rezeptur, was dem Ziel einer verminderten Wasseraufnahme zuwiderläuft. Trotz hoher Mengen an Additiven besteht gemäß dem Stand der Technik trotzdem die Gefahr, dass die Beschichtungszusammensetzung eindickt, und daher während der Lagerung durch Rühren stets in Bewegung gehalten werden. Ferner ergeben Beschichtungszusammensetzungen mit hohen Mengen an Wasserglas eine eher spröde Beschichtung. Außerdem ist Wasserglas sehr hydrophil. Das bedeutet wiederum, dass ein Beschichtungsfilm aus einer Zusammensetzung mit hohem Wasserglas-Gehalt ebenfalls hydrophil ist und zu starker Wasseraufnahme neigt. Des Weiteren haben Zusammensetzungen mit einem hohen Anteil an Wasserglas auch einen hohen pH-Wert, was bestimmte Schutzvorkehrungen bei der Verarbeitung erforderlich macht, um keine Umwelt- oder Gesundheitsbeeinträchtigungen zu verursachen. Auch kann es durch hohe pH-Werte zu negativen Wechselwirkungen mit dem zu beschichtenden Untergrund oder mit der auf den Putz- oder Haftgrund aufzubringenden Endbeschichtung kommen.

Erfindungsgemäß wird Wasserglas daher nicht als mineralisches Co-Bindemittel eingesetzt, sondern lediglich als Additiv, vorrangig als Enthärter, um die beispielsweise aus der Verwendung von karbonatischen Füllstoffen, wie CaCOs, stammenden, freien $Ca^{2+}$-Ionen abzufangen. Ohne an eine bestimmte Theorie gebunden sein zu wollen wird vermutet, dass Wasserglas zusammen mit $Ca^{2+}$-Ionen schwerlösliche Calciumsilikathydrate bildet. Dadurch kann erfindungsgemäß auf eine herkömmliche Enthärtung durch z.B. Natrium Polyphosphate (welche in der Farbenbranche häufig auch als Netzmittel angesehen werden) verzichtet werden.

Ferner wird durch die erfindungsgemäß niedrigeren Anteile an Wasserglas eine weniger spröde Beschichtung erhalten, die zudem einen niedrigeren pH-Wert aufweist. Dadurch kann die Beschichtungszusammensetzung der vorliegenden Erfindung in einem breiteren Anwendungsbereich eingesetzt werden, neben der Beschichtung von Steinwollen beispielsweise auch auf Holzweichfaser oder Akustikelementen im Innenraum, etc.

Geeignete Arten von Wasserglas sind erfindungsgemäß nicht besonders beschränkt. Illustrative Beispiele davon umfassen Natrium-, Kalium- oder Lithiumwasserglas oder Gemische davon. Vorzugsweise wird Kaliumwasserglas eingesetzt.

Die Beschichtungszusammensetzung der vorliegenden Erfindung enthält ferner Wasser. In einer Ausführungsform enthält die Beschichtungszusammensetzung Wasser in einer Menge von 20 bis 60 Gew.%, bezogen auf das Gesamtgewicht der Beschichtungszusammensetzung. In einer bevorzugten Ausführungsform enthält die Beschichtungszusammensetzung Wasser in einer Menge von 25 bis 55 Gew.%, stärker bevorzugt 35 bis 50 Gew.%.

Die Beschichtungszusammensetzung ist ferner im Wesentlichen frei ist von Netz- und Dispergiermitteln, Entschäumern, Wachsen, Mattierungsmitteln, Filmbildehilfsmitteln und Entlüftern.

Der Begriff *"im Wesentlichen frei"* bedeutet gemäß der Erfindung, dass auf eine bewusste Zugabe der genannten Substanzen verzichtet wird. In einer Ausführungsform bedeutet der Begriff *"im Wesentlichen frei",* dass in der erfindungsgemäßen Beschichtungszusammensetzung der Gehalt an Netz- und Dispergiermitteln, Entschäumern, Wachsen, Mattierungsmitteln, Filmbildehilfsmitteln und Entlüftern in der Summe bei weniger als 0,1 Gew.%, bezogen auf das Gesamtgewicht der Beschichtungszusammensetzung, liegt. In einer Ausführungsform liegt der Gehalt an Netz- und Dispergiermitteln, Entschäumern, Wachsen, Mattierungsmitteln, Filmbildehilfsmitteln und Entlüftern in der Summe bei 0,05 Gew.% oder weniger, bezogen auf das Gesamtgewicht der Beschichtungszusammensetzung, wie etwa bei 0,01 Gew.% oder weniger. Damit liegt die erfindungsgemäß zulässige Menge der fraglichen Substanzen weit unter deren Wirksamkeitsschwellen oder den im Stand der Technik üblichen Mengen.

Netz- und Dispergiermittel, Entschäumer, Wachse, Mattierungsmittel, Filmbildehilfsmittel und Entlüfter sind im Stand der Technik bekannt und als Additive üblich oder sogar notwendig. Gemäß der vorliegenden Erfindung werden diese bekannten und üblichen Substanzen allerdings im Wesentlichen ausgeschlossen. Einem Fachmann ist bekannt was unter einem Netzmittel, Dispergiermittel, Entschäumer, Wachs, Mattierungsmittel, Filmbildehilfsmittel oder Entlüfter zu verstehen ist. In Bezug auf Netzmittel, Dispergiermittel, Entschäumer, Mattierungsmittel und Filmbildehilfsmittel wird beispielsweise auf die entsprechenden Definitionen in der DIN EN ISO 4618-1 (2015) verwiesen. Netzmittel sind Additive, die das Benetzen von Füllstoff-/Pigmentteilchen mit einer flüssigen Phase oder des Substrates mit einem Beschichtungsstoff durch Verringern der Oberflächenspannung verbessern. Dispergiermittel sind Additive, die das Dispergieren von Feststoffen beim Herstellen von Beschichtungsstoffen erleichtern und deren Stabilität erhöhen. Entschäumer sind Additive, die während der Herstellung und/oder des Auftragens des Beschichtungsstoffes Schaumbildung oder die Neigung zur Schaumbildung verhindern. Mattierungsmittel sind Produkte, die einem Beschichtungsstoff zugesetzt wird, um den Glanz der Beschichtung zu verringern Filmbildehilfsmittel (auch als Koaleszenzmittel bezeichnet) sind Additive, die bei einem Beschichtungsstoff auf Basis einer Polymerdispersion die Filmbildung fördern. Wachse sind ebenfalls im Stand der Technik bekannt und werden oft als Mattierungsmittel oder Hydrophobierungsmittel eingesetzt, meist in Form einer Wachsemulsion. Wachse können allerdings nur emulgiert werden, wenn Emulgatoren eingesetzt werden. Entlüfter sind Additive, die das Verschmelzen mehrerer kleinerer Luftblasen zu einer großen und damit den Aufstieg an die Oberfläche begünstigen. Entlüfter werden manchmal grob zu Entschäumern gezählt. Bei Entschäumern steht das Platzen der Luftblasen an der Oberfläche im Vordergrund, bei Entlüftern das Aufsteigen oder Austreiben der Luftblasen.

Netz- und Dispergiermittel, Entschäumer, Wachse, Mattierungsmittel, Filmbildehilfsmittel und Entlüfter enthalten in der Regel größere Mengen an oberflächenaktiven Substanzen, wie Emulgatoren oder Detergenzien. Aufgrund dieser oberflächenaktiven Substanzen erhöht sich auch die Wasseraufnahme von Beschichtungen, welche die vorstehend ausgeschlossenen Additive enthalten, was erfindungsgemäß unerwünscht ist. Es ist ungewöhnlich und überraschend, dass die polymergebundenen, füllstoffhaltigen Beschichtungszusammensetzungen gemäß der vorliegenden Erfindung, die im Wesentlichen keine der vorstehend genannten Additive enthalten, dennoch lagerstabil und gut verarbeitbar, z.B. sogar airlessspritzbar, sind.

Wie vorstehend ausgeführt enthält die Beschichtungszusammensetzung der vorliegenden Erfindung in einer speziellen Ausführungsform weniger als 0,1 Gew.%, bezogen auf das Gesamtgewicht der Beschichtungszusammensetzung, wie etwa 0,05 Gew.% oder weniger oder 0,01 Gew.% oder weniger, an Netz- und Dispergiermitteln, Entschäumern, Wachsen, Mattierungsmitteln, Filmbildehilfsmitteln und Entlüftern. Eine Beschichtungszusammensetzung, die vollständig frei von diesen Additiven ist, ist jedoch kaum zu erhalten, da die vorstehend genannten Additive bereits in verschiedenen erfindungsgemäß erforderlichen Rohstoffen in kleinen Mengen enthalten sein können. Beispielsweise können im Handel erhältliche Dispersionen von organischen Polymer-Bindemitteln geringe Mengen beispielsweise an Netz- und/oder Dispergiermitteln enthalten. Daher bedeutet der Begriff *"im Wesentlichen frei"* gemäß der Erfindung, dass auf eine bewusste Zugabe der genannten Substanzen verzichtet wird und/oder dass der Gehalt der betreffenden Substanzen bei weniger als 0,1 Gew.%, bezogen auf das Gesamtgewicht der Beschichtungszusammensetzung, wie etwa 0,05 Gew.% oder weniger oder 0,01 Gew.% oder weniger, liegt.

Andere übliche Additive, die üblicherweise keine oder kaum oberflächenaktive Substanzen beinhalten, können in der Beschichtungszusammensetzung gemäß der vorliegenden Erfindung sehr wohl enthalten sein. In einer Ausführungsform enthält die Beschichtungszusammensetzung Additive, ausgewählt aus rheologischen Additiven, Verdickern, Bioziden sowie Topf- und Filmkonservierungsmitteln, in einer Gesamtmenge, bezogen auf das Gesamtgewicht der Beschichtungszusammensetzung, von bis zu 2 Gew.%. In einer bevorzugten Ausführungsform enthält die Beschichtungszusammensetzung rheologische Additive, Verdicker, Biozide und/oder Topf- und Filmkonservierungsmittel in einer Gesamtmenge von bis zu 1 Gew.%, stärker bevorzugt von bis zu 0,6 Gew.%.

In einer weiterhin bevorzugten Ausführungsform ist die Beschichtungszusammensetzung der vorliegenden Erfindung im Wesentlichen frei ist von Füllstoffen und Pigmenten, die jeweils eine Ölzahl, bestimmt gemäß DIN EN ISO 787-5, von 36 g/100g oder mehr aufweisen. Der Begriff *"im Wesentlichen frei"* bedeutet auch hier, dass auf eine bewusste Zugabe von Füllstoffen und Pigmenten, die jeweils eine Ölzahl von 36 g/100g oder mehr aufweisen, verzichtet wird und/oder dass der Gehalt an Füllstoffen und Pigmenten, die jeweils eine Ölzahl von 36 g/100g oder mehr aufweisen, in der Summe bei weniger als 0,1 Gew.%, bezogen auf das Gesamtgewicht der Beschichtungszusammensetzung, wie etwa 0,05 Gew.% oder weniger oder 0,1 Gew.% oder weniger, liegt. Bei Füllstoffen oder Pigmenten mit einer relativ hohen Ölzahl handelt es sich um Substanzen mit einer lamellaren, nadelförmigen und/oder porösen Struktur, wie beispielsweise Schichtsilikate. Durch den Verzicht auf Füllstoffe und Pigmente, die jeweils eine Ölzahl von 36 g/100g oder mehr aufweisen, kann der Bedarf an typischen oberflächenaktiven Substanzen, wie Netzmitteln oder Tensiden, weiter reduziert oder eliminiert werden, wodurch auch der Bedarf an Entschäumern sinkt oder eliminiert wird. Ferner weisen Füllstoffe und Pigmente mit einer niedrigeren Ölzahl, wie sie erfindungsgemäß verwendet werden, einen geringeren Bindemittelbedarf auf.

In einer weiteren Ausführungsform ist die Beschichtungszusammensetzung im Wesentlichen frei von Füllstoffen oder Füllstofffraktionen, die einen Medianwert der Partikelgröße $D_{50}$, bestimmt gemäß DIN ISO 9276-1:2004-09 und ISO 9276-2:2014-05, von mehr als 20 $\mu$m aufweisen. Gemäß dieser Ausführungsform der Erfindung wird die Verwendung von gröberen Füllstoffen bzw. Füllstofffraktionen mit einem Medianwert der Partikelgröße $D_{50}$ von mehr als 20 $\mu$m im Wesentlichen ausgeschlossen. Der Begriff *"im Wesentlichen frei"* bedeutet im Zusammenhang mit gröberen Füllstoffen bzw. Füllstofffraktionen, dass auf eine bewusste Zugabe von Füllstoffen oder Füllstofffraktionen mit einem Medianwert der Partikelgröße $D_{50}$ von mehr als 20 $\mu$m verzichtet wird und/oder dass der Gehalt an Füllstoffen oder Füllstofffraktionen mit einem Medianwert der Partikelgröße $D_{50}$ von mehr als 20 $\mu$m in der Beschichtungszusammensetzung bei weniger als 1,0 Gew.%, bezogen auf das Gesamtgewicht der Zusammensetzung, wie etwa 0,5 Gew.% oder weniger oder 0,1 Gew.% oder weniger, liegt. In einer Ausführungsform ist die Beschichtungszusammensetzung frei ist von Füllstoffen oder Füllstofffraktionen mit einem Medianwert der Partikelgröße $D_{50}$ von mehr als 20 $\mu$m. Eine gröbere Füllstofffraktion, die gemäß dieser Ausführungsform im Wesentlichen ausgeschlossen ist, könnte die Ausbildung einer möglichst dichten Packung stören.

In einer weiteren Ausführungsform ist die Zusammensetzung im Wesentlichen frei ist von Füllstoffen, die einen Medianwert der Partikelgröße $D_{50}$, bestimmt gemäß DIN ISO 9276-1:2004-09 und ISO 9276-2:2014-05, von mehr als 20 $\mu$m aufweisen. Gemäß dieser Ausführungsform der Erfindung wird die Verwendung von gröberen Füllstoffen bzw. Füllstofffraktionen mit einem Medianwert der Partikelgröße $D_{50}$ von mehr als 20 $\mu$m im Wesentlichen ausgeschlossen. Der Begriff *"im Wesentlichen frei"* gemäß der Erfindung bedeutet auch in diesem Zusammenhang, dass auf eine bewusste Zugabe von Füllstoffen oder Füllstofffraktionen mit einem Medianwert der Partikelgröße $D_{50}$ von mehr als 20 $\mu$m verzichtet wird und/oder dass der Gehalt an Füllstoffen oder Füllstofffraktionen mit einem Medianwert der Partikelgröße $D_{50}$ von mehr als 20 $\mu$m in der Zusammensetzung bei weniger als 0,1 Gew.%, bezogen auf das Gesamtgewicht der Zusammensetzung, wie etwa 0,05 Gew.% oder weniger oder 0,01 Gew.% oder weniger, liegt.

In einer Ausführungsform betrifft die vorliegende Erfindung eine Beschichtungszusammensetzung, wobei die Beschichtungszusammensetzung umfasst:

mindestens ein organisches Polymer-Bindemittel in einer Gesamtmenge von 1,0 Gew.% bis 12,0 Gew.%, bezogen auf den Feststoffgehalt des organischen Polymer-Bindemittels und das Gesamtgewicht der Beschichtungszusammensetzung,
eine mindestens bimodale Füllstoffkombination in einer Gesamtmenge von 35 bis 75 Gew.%, bezogen auf das Gesamtgewicht der Beschichtungszusammensetzung, wobei die mindestens bimodale Füllstoffkombination umfasst, vorzugsweise im Wesentlichen besteht aus, stärker bevorzugt besteht aus:

mindestens einem Feinfüllstoff (A) in einer Gesamtmenge von 20 bis 50 Gew.%, bezogen auf das Gesamtgewicht der Beschichtungszusammensetzung, und
mindestens einem Feinstfüllstoff (B) in einer Gesamtmenge von 5 bis 30 Gew.%, bezogen auf das Gesamtgewicht der Beschichtungszusammensetzung,

ein Hydrophobierungsmittel auf Siloxan-Basis in einer Menge von 0,05 bis 2,0 Gew.%, bezogen auf das Gesamtgewicht der Beschichtungszusammensetzung,
Wasserglas in einer Menge von höchstens 1,5 Gew.%, bezogen auf den Feststoffgehalt des Wasserglases und das Gesamtgewicht der Beschichtungszusammensetzung, vorzugsweise in einer Menge von 0,2 bis 1,5 Gew.%, stärker bevorzugt 0,2 bis 1,2 Gew.%, weiterhin bevorzugt 0,3 bis 0,8 Gew.%,
Wasser in einer Menge von 20 bis 60 Gew.%, bezogen auf das Gesamtgewicht der Beschichtungszusammensetzung, und
gegebenenfalls Additiven, ausgewählt aus rheologischen Additiven, Verdickern, Bioziden und/oder Topf- und Filmkonservierungsmitteln, in eine Gesamtmenge, bezogen auf das Gesamtgewicht der Beschichtungszusammensetzung, von bis zu 2 Gew.%.

In einer bevorzugten Ausführungsform besteht die erfindungsgemäße Beschichtungszusammensetzung im Wesentlichen aus den unmittelbar vorstehend genannten Bestandteilen in den unmittelbar vorstehend genannten Mengen. In einer weiter bevorzugten Ausführungsform besteht die erfindungsgemäße Beschichtungszusammensetzung aus den unmittelbar vorstehend genannten Bestandteilen in den unmittelbar vorstehend genannten Mengen.

In einer weiteren Ausführungsform betrifft die vorliegende Erfindung eine Beschichtungszusammensetzung, wobei die Beschichtungszusammensetzung umfasst:

mindestens ein organisches Polymer-Bindemittel in einer Gesamtmenge von 1,0 Gew.% bis 8,0 Gew.%, bezogen auf den Feststoffgehalt des organischen Polymer-Bindemittels und das Gesamtgewicht der Beschichtungszusammensetzung,
eine mindestens bimodale Füllstoffkombination in einer Gesamtmenge von 40 bis 70 Gew.%, bezogen auf das Gesamtgewicht der Beschichtungszusammensetzung, wobei die mindestens bimodale Füllstoffkombination umfasst, vorzugsweise im Wesentlichen besteht aus, stärker bevorzugt besteht aus

mindestens einem Feinfüllstoff (A) in einer Gesamtmenge von 25 bis 45 Gew.%, bezogen auf das Gesamtgewicht der Beschichtungszusammensetzung, und
mindestens einem Feinstfüllstoff (B) in einer Gesamtmenge von 8 bis 25 Gew.%, bezogen auf das Gesamtgewicht der Beschichtungszusammensetzung,

ein Hydrophobierungsmittel auf Siloxan-Basis in einer Menge von 0,1 bis 1,5 Gew.%, bezogen auf das Gesamtgewicht der Beschichtungszusammensetzung,
Wasserglas in einer Menge von 0,2 bis 1,5 Gew.%, bezogen auf den Feststoffgehalt des Wasserglases und das Gesamtgewicht der Beschichtungszusammensetzung,
Wasser in einer Menge von 25 bis 55 Gew.%, bezogen auf das Gesamtgewicht der Beschichtungszusammensetzung, und
gegebenenfalls Additiven, ausgewählt aus rheologischen Additiven, Verdickern, Bioziden und/oder Topf- und Filmkonservierungsmitteln, in eine Gesamtmenge, bezogen auf das Gesamtgewicht der Beschichtungszusammensetzung, von bis zu 1 Gew.%.

In einer bevorzugten Ausführungsform besteht die erfindungsgemäße Beschichtungszusammensetzung im Wesentlichen aus den unmittelbar vorstehend genannten Bestandteilen in den unmittelbar vorstehend genannten Mengen. In einer weiter bevorzugten Ausführungsform besteht die erfindungsgemäße Beschichtungszusammensetzung aus den unmittelbar vorstehend genannten Bestandteilen in den unmittelbar vorstehend genannten Mengen.

In einer weiteren Ausführungsform betrifft die vorliegende Erfindung eine Beschichtungszusammensetzung, wobei die Beschichtungszusammensetzung umfasst:

mindestens ein organisches Polymer-Bindemittel in einer Gesamtmenge von 2,0 Gew.% bis 6,0 Gew.%, bezogen auf den Feststoffgehalt des organischen Polymer-Bindemittels und das Gesamtgewicht der Beschichtungszusammensetzung,

eine mindestens bimodale Füllstoffkombination in einer Gesamtmenge von 45 bis 65 Gew.%, bezogen auf das Gesamtgewicht der Beschichtungszusammensetzung, wobei die mindestens bimodale Füllstoffkombination umfasst, vorzugsweise im Wesentlichen besteht aus, stärker bevorzugt besteht aus

> mindestens einem Feinfüllstoff (A) in einer Gesamtmenge von 30 bis 45 Gew.%, bezogen auf das Gesamtgewicht der Beschichtungszusammensetzung, und
> mindestens einem Feinstfüllstoff (B) in einer Gesamtmenge von 10 bis 22 Gew.%, bezogen auf das Gesamtgewicht der Beschichtungszusammensetzung,

ein Hydrophobierungsmittel auf Siloxan-Basis in einer Menge von 0,1 bis 1,0 Gew.%, bezogen auf das Gesamtgewicht der Beschichtungszusammensetzung,
Wasserglas in einer Menge von 0,2 bis 1,2 Gew.%, bezogen auf den Feststoffgehalt des Wasserglases und das Gesamtgewicht der Beschichtungszusammensetzung, vorzugsweise in einer Menge von 0,3 bis 0,8 Gew.%,
Wasser in einer Menge von 35 bis 50 Gew.%, bezogen auf das Gesamtgewicht der Beschichtungszusammensetzung, und
gegebenenfalls Additiven, ausgewählt aus rheologischen Additiven, Verdickern, Bioziden und/oder Topf- und Filmkonservierungsmitteln, in eine Gesamtmenge, bezogen auf das Gesamtgewicht der Beschichtungszusammensetzung, von bis zu 0,6 Gew.%.

In einer bevorzugten Ausführungsform besteht die erfindungsgemäße Beschichtungszusammensetzung im Wesentlichen aus den unmittelbar vorstehend genannten Bestandteilen in den unmittelbar vorstehend genannten Mengen. In einer weiter bevorzugten Ausführungsform besteht die erfindungsgemäße Beschichtungszusammensetzung aus den unmittelbar vorstehend genannten Bestandteilen in den unmittelbar vorstehend genannten Mengen.

Die Beschichtungszusammensetzung der vorliegenden Erfindung findet als Putzgrund, Haftgrund oder als Schutzschicht Verwendung. Die vorliegende Erfindung betrifft auch eine Oberflächenbeschichtung, die mittels der vorstehend beschriebenen Beschichtungszusammensetzung erhältlich ist. Ebenso betrifft die Erfindung eine Oberflächenbeschichtung, die mittels der vorstehend beschriebenen Beschichtungszusammensetzung erhalten wurde. Ferner betrifft die vorliegende Erfindung auch die Verwendung der Oberflächenbeschichtung als Putzgrund, Haftgrund oder als Schutzschicht. Die Oberflächenbeschichtung der vorliegenden Erfindung wirkt als Haftvermittler zwischen dem Untergrund und darauf folgenden Beschichtungen, wie Putz- oder Armierungsschichten. Insbesondere kann die Oberflächenbeschichtung als Haftvermittler zwischen Dämmplatten und darauf aufgebrachten Kleber- und Armierungsmassen eingesetzt werden. Ebenso kann die Oberflächenbeschichtung zum Schutz von Dämmplatten vor schädigenden Wirkungen, die beispielsweise durch die aufzubringende Beschichtungsmassen verursacht werden, eingesetzt werden. Beispielsweise können Mineralwolleplatten mit der erfindungsgemäßen Beschichtungszusammensetzung beschichtet werden, z.B. werkseitig. Es können aber auch andere Oberflächen, wie beispielsweise Holzweichfaser, etc., mit der Beschichtungszusammensetzung beschichtet werden.

**Beispiele**

Anhand eines konkreten Ausführungsbeispiels werden nachfolgend einige Vorteile der Erfindung aufgezeigt. Das Ausführungsbeispiel und das Referenzbeispiel geben Beschichtungszusammensetzungen zur Beschichtung von beispielsweise Mineralwolle-Dämmplatten an. Die nachstehende Tabelle 1 gibt die Zusammensetzung der Beschichtungszusammensetzungen gemäß Referenzbeispiel und erfindungsgemäßem Anwendungsbeispiel in Gew.% an.

<div align="center">Tabelle 1:</div>

|  | Referenzbeispiel | Anwendungsbeispiel |
|---|---|---|
| CaCOs (D$_{50}$: 3 $\mu$m, Ölzahl: ca. 18 g/100g) | - | 14,0 |
| Schichtsilikate (D$_{50}$: 5 $\mu$m, Ölzahl: ca. 60 g/100g) | 10,0 | - |
| CaCO$_3$ (D$_{50}$: 8 $\mu$m, Ölzahl: ca. 14 g/100g) | 40,0 | 40,0 |
| Polymerbindemittel auf Basis Styrolacrylat (bezogen auf Feststoffgehalt) | 3,0 | 3,0 |
| Wasserglas (bezogen auf Feststoffgehalt) | 3,5 | 0,5 |
| Silikonöl | - | 0,3 |

(fortgesetzt)

| | Referenzbeispiel | Anwendungsbeispiel |
|---|---|---|
| Wasser | 42,0 | 41,5 |
| Additive: Topfkonservierungsmittel, Rheologieadditive | 0,7 | 0,7 |
| Netz-/Dispergiermittel | 0,6 | - |
| Entschäumer | 0,2 | - |
| pH-Wert | 11,5 | 10,5 |
| Viskosität nach einem Tag [Pa·s] | 0,88 | 0,91 |
| Viskosität nach 42 Tagen bei 40°C [Pa·s] | 1,54 | 0,86 |

Bei dem Referenzbeispiel handelt es sich um eine im Stand der Technik gängige Beschichtungszusammensetzung. Die erfindungsgemäße Beschichtungszusammensetzung weist einen niedrigeren pH-Wert auf, insbesondere einen pH-Wert von unter 11, wodurch die Kennzeichnungspflicht mit entsprechenden Sicherheitshinweisen auf den Gebinden entfällt und weniger strenge Sicherheitsvorkehrungen getroffen werden müssen. Ferner weist die erfindungsgemäße Beschichtungszusammensetzung eine verbesserte Lagerstabilität auf, obwohl auf Netz und Dispergiermittel und Entschäumer verzichtet wird.

Die Beschichtungszusammensetzungen gemäß Referenzbeispiel und erfindungsgemäßem Anwendungsbeispiel wurden zur Bestimmung der Scheubeständigkeit und der PCS-Werte gemäß nachstehender Tabelle 2 auf ein geeignetes Substrat aufgetragen. Ferner wurden die Beschichtungszusammensetzungen gemäß Referenzbeispiel und erfindungsgemäßem Anwendungsbeispiel wurden zur Bestimmung der Wasseraufnahme und Wasserdampfdurchlässigkeit auf zwei verschiedene, handelsübliche Mineralwoll-Dämmplatten aufgebracht. In der nachstehenden Tabelle 2 sind auch Vergleichswerte der unbeschichteten Dämmplatten angegeben.

Tabelle 2:

| | Referenzbeispiel | Anwendungsbeispiel | unbeschichtet |
|---|---|---|---|
| Scheuerbeständigkeit nach 7 Tagen | 61 $\mu$m /Klasse 4 | 24 $\mu$m /Klasse 3 | |
| Scheuerbeständigkeit nach 28 Tagen | 64 $\mu$m /Klasse 4 | 11 $\mu$m /Klasse 2 | |
| Wasseraufnahme nach DIN EN 1609 [kg/m$^2$] | 0,312 | 0,178 | 0,168 |
| Wasserdampfdurchlässigkeit nach DIN EN 12086 | 0,12-0,13 | 0,12-0,13 | 0,12-0,13 |
| Wasseraufnahme nach DIN EN 1609 [kg/m$^2$] | 1,156 | 0,778 | 0,780 |
| PCS-Wert nach DIN EN ISO 1716 [MJ/kg] | 2,2 | 1,1 | |

Die Bestimmung der Scheuerbeständigkeit (Nassabriebklasse) gemäß vorstehender Tabelle 2 erfolgt gemäß DIN EN ISO 11998:2006-10 in Verbindung mit DIN EN 13300 (November 2002). Die erfindungsgemäße Beschichtungszusammensetzung zeigt eine verbesserte Scheuerbeständigkeit, eine reduzierte Wasseraufnahme und einen verringerten PCS-Wert. Die Wasserdampfdurchlässigkeit wird dagegen nicht beeinträchtigt.

**Patentansprüche**

1. Beschichtungszusammensetzung, umfassend

   (a) mindestens ein organisches Polymer-Bindemittel,
   (b) eine mindestens bimodale Füllstoffkombination mit

   (i) mindestens einem Feinfüllstoff (A) mit einen Medianwert der Partikelgröße $D_{50}$, bestimmt gemäß DIN ISO 9276-1:2004-09 und ISO 9276-2:2014-05, von 5 $\mu$m bis 20 $\mu$m, und
   (ii) mindestens einem Feinstfüllstoff (B) mit einen Medianwert der Partikelgröße $D_{50}$ von 0,5 $\mu$m bis weniger als 5 $\mu$m,

   (c) ein Hydrophobierungsmittel auf Siloxan-Basis,

(d) Wasserglas in einer Menge von höchstens 1,5 Gew.%, bezogen auf den Feststoffgehalt des Wasserglases und das Gesamtgewicht der Beschichtungszusammensetzung, und
(e) Wasser,

wobei die Beschichtungszusammensetzung im Wesentlichen frei ist von Netz- und Dispergiermitteln, Entschäumern, Wachsen, Mattierungsmitteln, Filmbildehilfsmitteln und Entlüftern.

2. Beschichtungszusammensetzung gemäß Anspruch 1, wobei das mindestens eine organische Polymer-Bindemittel ausgewählt ist aus organischen Polymer-Bindemittel auf Basis von Vinylacetat/Ethylen-Copolymeren, Copolymeren auf Basis von Vinylaromaten, und/oder Homo- oder Copolymeren auf Basis von (Meth)acrylaten, und wobei das mindestens eine organische Polymer-Bindemittel *vorzugsweise* ausgewählt ist aus Homo- oder Copolymeren auf Basis von Reinacrylaten und/oder auf Basis von Styrolacrylatcopolymeren,
und/oder
wobei das mindestens eine organische Polymer-Bindemittel in der Beschichtungszusammensetzung in einer Gesamtmenge von 1,0 Gew.% bis 12,0 Gew.%, bezogen auf den Feststoffgehalt des organischen Polymer-Bindemittels und das Gesamtgewicht der Beschichtungszusammensetzung, vorhanden ist, *vorzugsweise* in einer Gesamtmenge von 1,0 Gew.% bis 8,0 Gew.%, *stärker bevorzugt* in einer Gesamtmenge von 2,0 Gew.% bis 6,0 Gew.%.

3. Beschichtungszusammensetzung gemäß Anspruch 1 oder Anspruch 2, wobei die mindestens bimodale Füllstoffkombination in der Beschichtungszusammensetzung in einer Gesamtmenge von 35 bis 75 Gew.%, bezogen auf das Gesamtgewicht der Beschichtungszusammensetzung, vorhanden ist, *vorzugsweise* in einer Gesamtmenge von 40 bis 70 Gew.%, *stärker bevorzugt* 45 bis 60 Gew.%.

4. Beschichtungszusammensetzung gemäß einem der Ansprüche 1 bis 3, wobei die mittlere Gesamt-Ölzahl aller Füllstoffe in der Beschichtungszusammensetzung 22 g/100g oder weniger beträgt, *vorzugsweise* 20 g/100g oder weniger, *stärker bevorzugt* 18 g/100g oder weniger,
und/oder
wobei der mittlere Gesamt-PCS-Wert aller Füllstoffe in der Beschichtungszusammensetzung weniger als 0 MJ/kg beträgt, *vorzugsweise* -0,5 MJ/kg oder weniger, *stärker bevorzugt* -0,8 MJ/kg oder weniger.

5. Beschichtungszusammensetzung gemäß einem der Ansprüche 1 bis 4, wobei der mindestens eine Feinfüllstoff (A) in der Beschichtungszusammensetzung in einer Gesamtmenge von 20 bis 50 Gew.%, bezogen auf das Gesamtgewicht der Beschichtungszusammensetzung, vorhanden ist, *vorzugsweise* in einer Gesamtmenge von 25 bis 45 Gew.%, *stärker bevorzugt* 30 bis 45 Gew.%,
und/oder

wobei der mindestens eine Feinfüllstoff (A) einen Medianwert der Partikelgröße $D_{50}$ von 5 $\mu$m bis 16 $\mu$m aufweist, *vorzugsweise* 5 $\mu$m bis 12 $\mu$m,
und/oder
wobei der mindestens eine Feinfüllstoff (A) eine Ölzahl, bestimmt gemäß DIN EN ISO 787-5, von 4 g/100g bis 30 g/100g aufweist, *vorzugsweise* von 8 g/100g bis 26 g/100g, stärker *bevorzugt* 10 g/100g bis 22 g/100g,
und/oder
wobei der mindestens eine Feinfüllstoff (A) ausgewählt ist aus silikatischen, karbonatischen, oxidischen, hydroxidischen und/oder sulfatischen Füllstoffen, *vorzugsweise* karbonatischen Füllstoffen und/oder Aluminiumhydroxid, *stärker bevorzugt* karbonatischen Füllstoffen,
und/oder
wobei der Anteil an Feinfüllstoff (A) mit einem PCS-Wert von 0 MJ/kg oder weniger (vorzugsweise mit einem PCS-Wert -0,5 MJ/kg oder weniger, stärker bevorzugt von -0,8 MJ/kg oder weniger) mehr als 40 Gew.-% beträgt, bezogen auf das Gesamtgewicht an Feinfüllstoff (A), vorzugsweise mehr als 50 Gew.-%, stärker bevorzugt mehr als 60 Gew.-%.

6. Beschichtungszusammensetzung gemäß einem der Ansprüche 1 bis 5, wobei der mindestens eine Feinstfüllstoff (B) in der Beschichtungszusammensetzung in einer Gesamtmenge von 5 bis 30 Gew.%, bezogen auf das Gesamtgewicht der Beschichtungszusammensetzung, vorhanden ist, *vorzugsweise* in einer Gesamtmenge von 8 bis 25 Gew.%, *stärker bevorzugt* 10 bis 22 Gew.%,
und/oder

wobei der mindestens eine Feinstfüllstoff (B) einen Medianwert der Partikelgröße $D_{50}$ von 0,8 $\mu$m bis weniger 5,0

μm aufweist, *vorzugsweise* 1,0 μm bis weniger als 5,0 μm,
und/oder
wobei der mindestens eine Feinstfüllstoff (B) eine Ölzahl, bestimmt gemäß DIN EN ISO 787-5, von 5 g/100g bis 35 g/100g aufweist, *vorzugsweise* von 10 g/100g bis 30 g/100g, *stärker bevorzugt* 12 g/100g bis 25 g/100g,
und/oder
wobei der mindestens eine Feinstfüllstoff (B) ausgewählt ist aus silikatischen, karbonatischen, oxidischen, hydroxidischen und/oder sulfatischen Füllstoffen, *vorzugsweise* karbonatischen Füllstoffen und/oder Aluminiumhydroxid, *stärker bevorzugt* karbonatischen Füllstoffen,
und/oder
wobei der Anteil an Feinstfüllstoff (B) mit einem PCS-Wert von 0 MJ/kg oder weniger (vorzugsweise mit einem PCS-Wert -0,5 MJ/kg oder weniger, stärker bevorzugt von -0,8 MJ/kg oder weniger) mehr als 40 Gew.-% beträgt, bezogen auf das Gesamtgewicht an Feinstfüllstoff (B), vorzugsweise mehr als 50 Gew.-%, stärker bevorzugt mehr als 60 Gew.-%.

7. Beschichtungszusammensetzung gemäß einem der Ansprüche 1 bis 6, wobei das Gewichtsverhältnis der Gesamtmasse des Feinfüllstoffs (A) in der Beschichtungszusammensetzung zu der Gesamtmasse des Feinstfüllstoffs (B) in der Beschichtungszusammensetzung 1-5 : 1 beträgt, und wobei *vorzugsweise* das Gewichtsverhältnis der Gesamtmasse des Feinfüllstoffs (A) in der Beschichtungszusammensetzung zu der Gesamtmasse des Feinstfüllstoffs (B) in der Beschichtungszusammensetzung 1,5-4 : 1, *stärker bevorzugt* 2-3 : 1, wie beispielsweise 2,5 : 1, beträgt,
und/oder

wobei das Volumenverhältnis des Gesamtvolumens des Feinfüllstoffs (A) in der Beschichtungszusammensetzung zu dem Gesamtvolumen des Feinstfüllstoffs (B) in der Beschichtungszusammensetzung 1-5 : 1 beträgt, und wobei *vorzugsweise* das Volumenverhältnis des Gesamtvolumens des Feinfüllstoffs (A) in der Beschichtungszusammensetzung zu dem Gesamtvolumen des Feinstfüllstoffs (B) in der Beschichtungszusammensetzung 1,5-4 : 1, *stärker bevorzugt* 2-3 : 1, wie beispielsweise 2,5 : 1, beträgt,
und/oder
wobei der Medianwert der Partikelgröße $D_{50}$ des Feinstfüllstoffs (B) 0,155 bis 0,414 des Medianwerts der Partikelgröße $D_{50}$ des Feinfüllstoffs (A) beträgt, und wobei vorzugsweise der Medianwert der Partikelgröße $D_{50}$ des Feinstfüllstoffs (B) 0,225 bis 0,414, stärker bevorzugt 0,225 bis 0,291 des Medianwerts der Partikelgröße $D_{50}$ des Feinfüllstoffs (A) beträgt.

8. Beschichtungszusammensetzung gemäß einem der Ansprüche 1 bis 7, wobei das Hydrophobierungsmittel auf Siloxan-Basis ausgewählt ist aus Polysiloxanen in Form von Silikonharzen oder Silikonölen, *vorzugsweise* linearen Silikonölen,
und/oder
wobei das Hydrophobierungsmittel auf Siloxan-Basis in der Beschichtungszusammensetzung in einer Menge von 0,05 bis 2,0 Gew.%, bezogen auf das Gesamtgewicht der Beschichtungszusammensetzung, vorhanden ist, *vorzugsweise* in einer Menge von 0,1 bis 1,5 Gew.%, *stärker bevorzugt* 0,1 bis 1,0 Gew.%.

9. Beschichtungszusammensetzung gemäß einem der Ansprüche 1 bis 8, wobei das Wasserglas ausgewählt ist aus Natrium-, Kalium- oder Lithiumwasserglas, *vorzugsweise* aus Kaliumwasserglas,
und/oder
wobei das Wasserglas in der Beschichtungszusammensetzung in einer Menge von 0,2 bis 1,5 Gew.%, bezogen auf den Feststoffgehalt des Wasserglases und das Gesamtgewicht der Beschichtungszusammensetzung, vorhanden ist, *vorzugsweise* in einer Menge von 0,2 bis 1,2 Gew.%, *stärker bevorzugt* 0,3 bis 0,8 Gew.%.

10. Beschichtungszusammensetzung gemäß einem der Ansprüche 1 bis 9, wobei die Beschichtungszusammensetzung weiterhin Additive enthält, die ausgewählt sind aus rheologischen Additiven, Verdickern, Bioziden sowie Topf- und Filmkonservierungsmitteln, wobei die Gesamtmenge dieser Additive in der Beschichtungszusammensetzung, bezogen auf das Gesamtgewicht der Beschichtungszusammensetzung, bis zu 2 Gew.%, *vorzugsweise* bis zu 1 Gew.%, *stärker bevorzugt* bis zu 0,6 Gew.% beträgt.

11. Beschichtungszusammensetzung gemäß einem der Ansprüche 1 bis 10, wobei die Beschichtungszusammensetzung, bezogen auf das Gesamtgewicht der Beschichtungszusammensetzung, Wasser in einer Menge von 20 bis 60 Gew.%, vorzugsweise 25 bis 55 Gew.%, stärker bevorzugt 35 bis 50 Gew.% enthält.

12. Beschichtungszusammensetzung gemäß einem der Ansprüche 1 bis 11, wobei die Beschichtungszusammensetzung weiterhin im Wesentlichen frei ist von Füllstoffen und Pigmenten, die jeweils eine Ölzahl, bestimmt gemäß DIN EN ISO 787-5, von 36 g/100g oder mehr aufweisen.

13. Beschichtungszusammensetzung gemäß einem der Ansprüche 1 bis 12, wobei die Beschichtungszusammensetzung umfasst, *vorzugsweise* im Wesentlichen besteht aus, *stärker bevorzugt* besteht aus:

mindestens ein organisches Polymer-Bindemittel in einer Gesamtmenge von 1,0 Gew.% bis 12,0 Gew.%, bezogen auf den Feststoffgehalt des organischen Polymer-Bindemittels und das Gesamtgewicht der Beschichtungszusammensetzung, *vorzugsweise* in einer Gesamtmenge von 1,0 Gew.% bis 8,0 Gew.%, *stärker bevorzugt* in einer Gesamtmenge von 2,0 Gew.% bis 6,0 Gew.%,
eine mindestens bimodale Füllstoffkombination in einer Gesamtmenge von 35 bis 75 Gew.%, bezogen auf das Gesamtgewicht der Beschichtungszusammensetzung, *vorzugsweise* in einer Gesamtmenge von 40 bis 70 Gew.%, *stärker bevorzugt* 45 bis 60 Gew.%, wobei die mindestens bimodale Füllstoffkombination umfasst, *vorzugsweise* im Wesentlichen besteht aus, *stärker bevorzugt* besteht aus

mindestens einem Feinfüllstoff (A) in einer Gesamtmenge von 20 bis 50 Gew.%, bezogen auf das Gesamtgewicht der Beschichtungszusammensetzung, *vorzugsweise* in einer Gesamtmenge von 25 bis 45 Gew.%, *stärker bevorzugt* 30 bis 45 Gew.%, und
mindestens einem Feinstfüllstoff (B) in einer Gesamtmenge von 5 bis 30 Gew.%, bezogen auf das Gesamtgewicht der Beschichtungszusammensetzung, *vorzugsweise* in einer Gesamtmenge von 8 bis 25 Gew.%, *stärker bevorzugt* 10 bis 22 Gew.%,

ein Hydrophobierungsmittel auf Siloxan-Basis in einer Menge von 0,05 bis 2,0 Gew.%, bezogen auf das Gesamtgewicht der Beschichtungszusammensetzung, *vorzugsweise* in einer Menge von 0,1 bis 1,5 Gew.%, *stärker bevorzugt* 0,1 bis 1,0 Gew.%,
Wasserglas in einer Menge von höchstens 1,5 Gew.%, bezogen auf den Feststoffgehalt des Wasserglases und das Gesamtgewicht der Beschichtungszusammensetzung, *vorzugsweise* in einer Menge von 0,2 bis 1,5 Gew.%, *stärker bevorzugt* 0,2 bis 1,2 Gew.%, *weiterhin bevorzugt* 0,3 bis 0,8 Gew.%,
Wasser in einer Menge von 20 bis 60 Gew.%, bezogen auf das Gesamtgewicht der Beschichtungszusammensetzung, *vorzugsweise* in einer Menge von 25 bis 55 Gew.%, *stärker bevorzugt* 35 bis 50 Gew.%, und
gegebenenfalls Additiven, ausgewählt aus rheologischen Additiven, Verdickern, Bioziden und/oder Topf- und Filmkonservierungsmitteln, in eine Gesamtmenge, bezogen auf das Gesamtgewicht der Beschichtungszusammensetzung, von bis zu 2 Gew.%, *vorzugsweise* bis zu 1 Gew.%, *stärker bevorzugt* bis zu 0,6 Gew.%.

14. Oberflächenbeschichtung, erhältlich mittels der Beschichtungszusammensetzung nach einem der Ansprüche 1 bis 13, *vorzugsweise* erhalten mittels der Beschichtungszusammensetzung nach einem der Ansprüche 1 bis 13.

15. Verwendung der Oberflächenbeschichtung nach Anspruch 14 als Putzgrund, Haftgrund oder als Schutzschicht.

**Geänderte Patentansprüche gemäss Regel 137(2) EPÜ.**

1. Beschichtungszusammensetzung, umfassend

(a) mindestens ein organisches Polymer-Bindemittel,
(b) eine mindestens bimodale Füllstoffkombination mit

(i) mindestens einem Feinfüllstoff (A) mit einen Medianwert der Partikelgröße $D_{50}$, bestimmt gemäß DIN ISO 9276-1:2004-09 und ISO 9276-2:2014-05, von 5 $\mu$m bis 20 $\mu$m, und
(ii) mindestens einem Feinstfüllstoff (B) mit einen Medianwert der Partikelgröße $D_{50}$ von 0,5 $\mu$m bis weniger als 5 $\mu$m,

(c) ein Hydrophobierungsmittel auf Siloxan-Basis, ausgewählt aus Polysiloxanen in Form von Silikonharzen oder Silikonölen,
(d) Wasserglas in einer Menge von höchstens 1,5 Gew.%, bezogen auf den Feststoffgehalt des Wasserglases und das Gesamtgewicht der Beschichtungszusammensetzung, und
(e) Wasser,
wobei die Beschichtungszusammensetzung in der Summe weniger als 0,1 Gew.%, bezogen auf das Gesamtgewicht der Beschichtungszusammensetzung, an Netz- und Dispergiermitteln, Entschäumern, Wachsen, Mattierungsmitteln, Filmbildehilfsmitteln und Entlüftern enthält.

2. Beschichtungszusammensetzung gemäß Anspruch 1, wobei das mindestens eine organische Polymer-Bindemittel ausgewählt ist aus organischen Polymer-Bindemittel auf Basis von Vinylacetat/Ethylen-Copolymeren, Copolymeren auf Basis von Vinylaromaten, und/oder Homo- oder Copolymeren auf Basis von (Meth)acrylaten, und wobei das mindestens eine organische Polymer-Bindemittel *vorzugsweise* ausgewählt ist aus Homo- oder Copolymeren auf Basis von Reinacrylaten und/oder auf Basis von Styrolacrylatcopolymeren,
und/oder
wobei das mindestens eine organische Polymer-Bindemittel in der Beschichtungszusammensetzung in einer Gesamtmenge von 1,0 Gew.% bis 12,0 Gew.%, bezogen auf den Feststoffgehalt des organischen Polymer-Bindemittels und das Gesamtgewicht der Beschichtungszusammensetzung, vorhanden ist, *vorzugsweise* in einer Gesamtmenge von 1,0 Gew.% bis 8,0 Gew.%, *stärker bevorzugt* in einer Gesamtmenge von 2,0 Gew.% bis 6,0 Gew.%.

3. Beschichtungszusammensetzung gemäß Anspruch 1 oder Anspruch 2, wobei die mindestens bimodale Füllstoffkombination in der Beschichtungszusammensetzung in einer Gesamtmenge von 35 bis 75 Gew.%, bezogen auf das Gesamtgewicht der Beschichtungszusammensetzung, vorhanden ist, *vorzugsweise* in einer Gesamtmenge von 40 bis 70 Gew.%, *stärker bevorzugt* 45 bis 60 Gew.%.

4. Beschichtungszusammensetzung gemäß einem der Ansprüche 1 bis 3, wobei die mittlere Gesamt-Ölzahl aller Füllstoffe in der Beschichtungszusammensetzung 22 g/100g oder weniger beträgt, *vorzugsweise* 20 g/100g oder weniger, *stärker bevorzugt* 18 g/100g oder weniger,
und/oder
wobei der mittlere Gesamt-PCS-Wert aller Füllstoffe in der Beschichtungszusammensetzung weniger als 0 MJ/kg beträgt, *vorzugsweise* -0,5 MJ/kg oder weniger, *stärker bevorzugt* -0,8 MJ/kg oder weniger.

5. Beschichtungszusammensetzung gemäß einem der Ansprüche 1 bis 4, wobei der mindestens eine Feinfüllstoff (A) in der Beschichtungszusammensetzung in einer Gesamtmenge von 20 bis 50 Gew.%, bezogen auf das Gesamtgewicht der Beschichtungszusammensetzung, vorhanden ist, *vorzugsweise* in einer Gesamtmenge von 25 bis 45 Gew.%, *stärker bevorzugt* 30 bis 45 Gew.%,
und/oder

wobei der mindestens eine Feinfüllstoff (A) einen Medianwert der Partikelgröße $D_{50}$ von 5 $\mu$m bis 16 $\mu$m aufweist, *vorzugsweise* 5 $\mu$m bis 12 $\mu$m,
und/oder
wobei der mindestens eine Feinfüllstoff (A) eine Ölzahl, bestimmt gemäß DIN EN ISO 787-5, von 4 g/100g bis 30 g/100g aufweist, *vorzugsweise* von 8 g/100g bis 26 g/100g, stärker *bevorzugt* 10 g/100g bis 22 g/100g,
und/oder
wobei der mindestens eine Feinfüllstoff (A) ausgewählt ist aus silikatischen, karbonatischen, oxidischen, hydroxidischen und/oder sulfatischen Füllstoffen, *vorzugsweise* karbonatischen Füllstoffen und/oder Aluminiumhydroxid, *stärker bevorzugt* karbonatischen Füllstoffen,
und/oder
wobei der Anteil an Feinfüllstoff (A) mit einem PCS-Wert von 0 MJ/kg oder weniger (vorzugsweise mit einem PCS-Wert -0,5 MJ/kg oder weniger, stärker bevorzugt von -0,8 MJ/kg oder weniger) mehr als 40 Gew.-% beträgt, bezogen auf das Gesamtgewicht an Feinfüllstoff (A), vorzugsweise mehr als 50 Gew.-%, stärker bevorzugt mehr als 60 Gew.-%.

6. Beschichtungszusammensetzung gemäß einem der Ansprüche 1 bis 5, wobei der mindestens eine Feinstfüllstoff (B) in der Beschichtungszusammensetzung in einer Gesamtmenge von 5 bis 30 Gew.%, bezogen auf das Gesamtgewicht der Beschichtungszusammensetzung, vorhanden ist, *vorzugsweise* in einer Gesamtmenge von 8 bis 25 Gew.%, *stärker bevorzugt* 10 bis 22 Gew.%,
und/oder

wobei der mindestens eine Feinstfüllstoff (B) einen Medianwert der Partikelgröße $D_{50}$ von 0,8 $\mu$m bis weniger 5,0 $\mu$m aufweist, *vorzugsweise* 1,0 $\mu$m bis weniger als 5,0 $\mu$m,
und/oder
wobei der mindestens eine Feinstfüllstoff (B) eine Ölzahl, bestimmt gemäß DIN EN ISO 787-5, von 5 g/100g bis 35 g/100g aufweist, *vorzugsweise* von 10 g/100g bis 30 g/100g, *stärker bevorzugt* 12 g/100g bis 25 g/100g, und/oder

wobei der mindestens eine Feinstfüllstoff (B) ausgewählt ist aus silikatischen, karbonatischen, oxidischen, hydroxidischen und/oder sulfatischen Füllstoffen, *vorzugsweise* karbonatischen Füllstoffen und/oder Aluminiumhydroxid, *stärker bevorzugt* karbonatischen Füllstoffen, und/oder

wobei der Anteil an Feinstfüllstoff (B) mit einem PCS-Wert von 0 MJ/kg oder weniger (vorzugsweise mit einem PCS-Wert -0,5 MJ/kg oder weniger, stärker bevorzugt von -0,8 MJ/kg oder weniger) mehr als 40 Gew.-% beträgt, bezogen auf das Gesamtgewicht an Feinstfüllstoff (B), vorzugsweise mehr als 50 Gew.-%, stärker bevorzugt mehr als 60 Gew.-%.

7. Beschichtungszusammensetzung gemäß einem der Ansprüche 1 bis 6, wobei das Gewichtsverhältnis der Gesamtmasse des Feinfüllstoffs (A) in der Beschichtungszusammensetzung zu der Gesamtmasse des Feinstfüllstoffs (B) in der Beschichtungszusammensetzung 1-5 : 1 beträgt, und wobei *vorzugsweise* das Gewichtsverhältnis der Gesamtmasse des Feinfüllstoffs (A) in der Beschichtungszusammensetzung zu der Gesamtmasse des Feinstfüllstoffs (B) in der Beschichtungszusammensetzung 1,5-4 : 1, *stärker bevorzugt* 2-3 : 1, wie beispielsweise 2,5 : 1, beträgt, und/oder

wobei das Volumenverhältnis des Gesamtvolumens des Feinfüllstoffs (A) in der Beschichtungszusammensetzung zu dem Gesamtvolumen des Feinstfüllstoffs (B) in der Beschichtungszusammensetzung 1-5 : 1 beträgt, und wobei *vorzugsweise* das Volumenverhältnis des Gesamtvolumens des Feinfüllstoffs (A) in der Beschichtungszusammensetzung zu dem Gesamtvolumen des Feinstfüllstoffs (B) in der Beschichtungszusammensetzung 1,5-4 : 1, *stärker bevorzugt* 2-3 : 1, wie beispielsweise 2,5 : 1, beträgt, und/oder
wobei der Medianwert der Partikelgröße $D_{50}$ des Feinstfüllstoffs (B) 0,155 bis 0,414 des Medianwerts der Partikelgröße $D_{50}$ des Feinstfüllstoffs (A) beträgt, und wobei vorzugsweise der Medianwert der Partikelgröße $D_{50}$ des Feinstfüllstoffs (B) 0,225 bis 0,414, stärker bevorzugt 0,225 bis 0,291 des Medianwerts der Partikelgröße $D_{50}$ des Feinfüllstoffs (A) beträgt.

8. Beschichtungszusammensetzung gemäß einem der Ansprüche 1 bis 7, wobei das Hydrophobierungsmittel auf Siloxan-Basis ausgewählt ist aus linearen Silikonölen, und/oder
wobei das Hydrophobierungsmittel auf Siloxan-Basis in der Beschichtungszusammensetzung in einer Menge von 0,05 bis 2,0 Gew.%, bezogen auf das Gesamtgewicht der Beschichtungszusammensetzung, vorhanden ist, *vorzugsweise* in einer Menge von 0,1 bis 1,5 Gew.%, *stärker bevorzugt* 0,1 bis 1,0 Gew.%.

9. Beschichtungszusammensetzung gemäß einem der Ansprüche 1 bis 8, wobei das Wasserglas ausgewählt ist aus Natrium-, Kalium- oder Lithiumwasserglas, *vorzugsweise* aus Kaliumwasserglas, und/oder
wobei das Wasserglas in der Beschichtungszusammensetzung in einer Menge von 0,2 bis 1,5 Gew.%, bezogen auf den Feststoffgehalt des Wasserglases und das Gesamtgewicht der Beschichtungszusammensetzung, vorhanden ist, *vorzugsweise* in einer Menge von 0,2 bis 1,2 Gew.%, *stärker bevorzugt* 0,3 bis 0,8 Gew.%.

10. Beschichtungszusammensetzung gemäß einem der Ansprüche 1 bis 9, wobei die Beschichtungszusammensetzung weiterhin Additive enthält, die ausgewählt sind aus rheologischen Additiven, Verdickern, Bioziden sowie Topf- und Filmkonservierungsmitteln, wobei die Gesamtmenge dieser Additive in der Beschichtungszusammensetzung, bezogen auf das Gesamtgewicht der Beschichtungszusammensetzung, bis zu 2 Gew.%, *vorzugsweise* bis zu 1 Gew.%, *stärker bevorzugt* bis zu 0,6 Gew.% beträgt.

11. Beschichtungszusammensetzung gemäß einem der Ansprüche 1 bis 10, wobei die Beschichtungszusammensetzung, bezogen auf das Gesamtgewicht der Beschichtungszusammensetzung, Wasser in einer Menge von 20 bis 60 Gew.%, vorzugsweise 25 bis 55 Gew.%, stärker bevorzugt 35 bis 50 Gew.% enthält.

12. Beschichtungszusammensetzung gemäß einem der Ansprüche 1 bis 11, wobei die Beschichtungszusammensetzung weiterhin im Wesentlichen frei ist von Füllstoffen und Pigmenten, die jeweils eine Ölzahl, bestimmt gemäß DIN EN ISO 787-5, von 36 g/100g oder mehr aufweisen.

13. Beschichtungszusammensetzung gemäß einem der Ansprüche 1 bis 12, wobei die Beschichtungszusammensetzung umfasst, *vorzugsweise* im Wesentlichen besteht aus, *stärker bevorzugt* besteht aus:

mindestens ein organisches Polymer-Bindemittel in einer Gesamtmenge von 1,0 Gew.% bis 12,0 Gew.%, bezogen auf den Feststoffgehalt des organischen Polymer-Bindemittels und das Gesamtgewicht der Beschichtungszusammensetzung, *vorzugsweise* in einer Gesamtmenge von 1,0 Gew.% bis 8,0 Gew.%, *stärker bevorzugt* in einer Gesamtmenge von 2,0 Gew.% bis 6,0 Gew.%,

eine mindestens bimodale Füllstoffkombination in einer Gesamtmenge von 35 bis 75 Gew.%, bezogen auf das Gesamtgewicht der Beschichtungszusammensetzung, *vorzugsweise* in einer Gesamtmenge von 40 bis 70 Gew.%, *stärker bevorzugt* 45 bis 60 Gew.%, wobei die mindestens bimodale Füllstoffkombination umfasst, *vorzugsweise* im Wesentlichen besteht aus, *stärker bevorzugt* besteht aus

> mindestens einem Feinfüllstoff (A) in einer Gesamtmenge von 20 bis 50 Gew.%, bezogen auf das Gesamtgewicht der Beschichtungszusammensetzung, *vorzugsweise* in einer Gesamtmenge von 25 bis 45 Gew.%, *stärker bevorzugt* 30 bis 45 Gew.%, und
> mindestens einem Feinstfüllstoff (B) in einer Gesamtmenge von 5 bis 30 Gew.%, bezogen auf das Gesamtgewicht der Beschichtungszusammensetzung, *vorzugsweise* in einer Gesamtmenge von 8 bis 25 Gew.%, *stärker bevorzugt* 10 bis 22 Gew.%,

ein Hydrophobierungsmittel auf Siloxan-Basis in einer Menge von 0,05 bis 2,0 Gew.%, bezogen auf das Gesamtgewicht der Beschichtungszusammensetzung, *vorzugsweise* in einer Menge von 0,1 bis 1,5 Gew.%, *stärker bevorzugt* 0,1 bis 1,0 Gew.%,

Wasserglas in einer Menge von höchstens 1,5 Gew.%, bezogen auf den Feststoffgehalt des Wasserglases und das Gesamtgewicht der Beschichtungszusammensetzung, *vorzugsweise* in einer Menge von 0,2 bis 1,5 Gew.%, *stärker bevorzugt* 0,2 bis 1,2 Gew.%, *weiterhin bevorzugt* 0,3 bis 0,8 Gew.%,

Wasser in einer Menge von 20 bis 60 Gew.%, bezogen auf das Gesamtgewicht der Beschichtungszusammensetzung, *vorzugsweise* in einer Menge von 25 bis 55 Gew.%, *stärker bevorzugt* 35 bis 50 Gew.%, und

gegebenenfalls Additiven, ausgewählt aus rheologischen Additiven, Verdickern, Bioziden und/oder Topf- und Filmkonservierungsmitteln, in eine Gesamtmenge, bezogen auf das Gesamtgewicht der Beschichtungszusammensetzung, von bis zu 2 Gew.%, *vorzugsweise* bis zu 1 Gew.%, *stärker bevorzugt* bis zu 0,6 Gew.%.

**14.** Oberflächenbeschichtung, erhältlich mittels der Beschichtungszusammensetzung nach einem der Ansprüche 1 bis 13, *vorzugsweise* erhalten mittels der Beschichtungszusammensetzung nach einem der Ansprüche 1 bis 13.

**15.** Verwendung der Oberflächenbeschichtung nach Anspruch 14 als Putzgrund, Haftgrund oder als Schutzschicht.

Europäisches Patentamt
European Patent Office
Office européen des brevets

# EUROPÄISCHER RECHERCHENBERICHT

Nummer der Anmeldung

EP 24 17 9550

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 3 505 575 A1 (DAW SE [DE]) 3. Juli 2019 (2019-07-03) * Absätze [0016], [0018] - [0021], [0033], [0036], [0049] * * Ansprüche 1-14 * ----- | 1-15 | INV. C09D7/61 C04B20/00 C09D7/40 C09D133/04 C09D5/02 |
| X | EP 3 505 576 A1 (DAW SE [DE]) 3. Juli 2019 (2019-07-03) * Ansprüche 1-19 * * Absätze [0015], [0028], [0040], [0042] - [0043], [0046] * ----- | 1-15 | |
| X | EP 3 974 479 A1 (DAW SE [DE]) 30. März 2022 (2022-03-30) * Absätze [0022], [0040], [0042], [0053], [0057] - [0059] * * Ansprüche 1-26 * ----- | 1-15 | |
| A | EP 3 712 216 A1 (BK GIULINI GMBH [DE]) 23. September 2020 (2020-09-23) * Absätze [0032], [0054], [0061] - [0062] * * Ansprüche 1-16 * ----- | 1-15 | RECHERCHIERTE SACHGEBIETE (IPC) C09D C08F C04B |
| A | WO 00/39049 A1 (ISPO GMBH [DE]; BORN ANDREA [DE] ET AL.) 6. Juli 2000 (2000-07-06) * Ansprüche 1-13 * ----- | 1-15 | |
| A | WO 2020/094349 A1 (GEBRUEDER DORFNER GMBH & CO KAOLIN UND KRISTALLQUARZSAND WERKE KG [DE]) 14. Mai 2020 (2020-05-14) * Seite 3, Zeile 31 - Seite 4, Zeile 21 * * Seite 5, Zeile 1 - Zeile 5 * * Ansprüche 1-15 * ----- | 1-15 | |

Der vorliegende Recherchenbericht wurde für alle Patentansprüche erstellt

| Recherchenort | Abschlußdatum der Recherche | Prüfer |
|---|---|---|
| München | 13. November 2024 | Siemsen, Beatrice |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

**13-11-2024**

| Im Recherchenbericht angeführtes Patentdokument | Datum der Veröffentlichung | Mitglied(er) der Patentfamilie | Datum der Veröffentlichung |
|---|---|---|---|
| EP 3505575 A1 | 03-07-2019 | EA 201892801 A2 | 28-06-2019 |
| | | EP 3505575 A1 | 03-07-2019 |
| | | UA 126148 C2 | 25-08-2022 |
| EP 3505576 A1 | 03-07-2019 | EA 201892800 A2 | 28-06-2019 |
| | | EP 3505576 A1 | 03-07-2019 |
| | | UA 126331 C2 | 21-09-2022 |
| EP 3974479 A1 | 30-03-2022 | KEINE | |
| EP 3712216 A1 | 23-09-2020 | DK 3712216 T3 | 13-02-2023 |
| | | EP 3712216 A1 | 23-09-2020 |
| | | ES 2937968 T3 | 03-04-2023 |
| | | FI 3712216 T3 | 08-03-2023 |
| | | PL 3712216 T3 | 12-06-2023 |
| | | PT 3712216 T | 13-02-2023 |
| WO 0039049 A1 | 06-07-2000 | AT E252524 T1 | 15-11-2003 |
| | | AU 2533200 A | 31-07-2000 |
| | | CZ 20012181 A3 | 17-07-2002 |
| | | DE 29923249 U1 | 07-09-2000 |
| | | DE 29923250 U1 | 31-08-2000 |
| | | DK 1144332 T3 | 23-02-2004 |
| | | EP 1144332 A1 | 17-10-2001 |
| | | ES 2211223 T3 | 01-07-2004 |
| | | HU 223634 B1 | 28-10-2004 |
| | | PL 348459 A1 | 20-05-2002 |
| | | PT 1144332 E | 31-03-2004 |
| | | SK 8852001 A3 | 05-02-2002 |
| | | US 6919398 B1 | 19-07-2005 |
| | | WO 0039049 A1 | 06-07-2000 |
| WO 2020094349 A1 | 14-05-2020 | AU 2019376799 A1 | 27-05-2021 |
| | | CA 3117834 A1 | 14-05-2020 |
| | | EP 3650503 A1 | 13-05-2020 |
| | | US 2020140700 A1 | 07-05-2020 |
| | | WO 2020094349 A1 | 14-05-2020 |

EPO FORM P0461

Für nähere Einzelheiten zu diesem Anhang : siehe Amtsblatt des Europäischen Patentamts, Nr.12/82